# DEMANDE DE BREVET EUROPEEN

(11) **EP 4 611 374 A1**
(43) Date de publication de la demande: **03.09.2025**
(21) Numéro de dépôt: 25160141.5
(22) Date de dépôt: 26.02.2025
(51) Int. Cl.: H04N 21/262, H04N 21/414, H04N 21/845

(54) **STREAMING VIDÉO ADAPTATIF DANS UN ENVIRONNEMENT DE TRANSPORT PARTAGÉ**

(30) Priorité: 01.03.2024 FR 2402082
(71) Demandeur: Groupe Canal +, 92863 ISSY-LES-MOULINEAUX CEDEX 9 (FR)
(72) Inventeur: NAUD, Pierre-Louis, 92863 ISSY-LES-MOULINEAUX (FR)
(74) Mandataire: Casalonga

(57) **Abrégé**

Pour contrôler, de façon centralisée, la qualité des contenus média lus par des lecteurs embarqués (199) dans un véhicule (150), un système de streaming adaptatif comporte un serveur de pilotage (120, 153) configuré pour modifier, en fonction d'une qualité cible courante (Q'), la liste ordonnée d'identifiants de chemin (PATHWAY-ID) du fichier Steering Manifest (126) entre plusieurs identifiants respectivement associés à des jeux de pistes du même contenu média, les jeux présentant des qualités maximales différentes. Lorsque les conditions ne permettent pas la récupération des segments média d'une piste de qualité élevée, le fichier Steering Manifest est modifié pour prioriser un PATHWAY-ID correspondant à des pistes de qualité moindre. Le lecteur est ainsi forcé à basculer sur l'une de ces pistes.

## Description

### Domaine de l'invention

La présente invention concerne le domaine de la diffusion continue ou « streaming » de contenus, typiquement multimédia.

### Techniques antérieures

Le streaming est utilisé pour visionner ou écouter des contenus média en ligne, sans avoir à télécharger de fichier dans le dispositif de restitution.

Le streaming fonctionne entre deux parties : d'un côté, un client équipé d'un lecteur de contenu au niveau d'un dispositif de restitution d'un utilisateur final et, de l'autre, un serveur (ou plusieurs serveurs) qui met à disposition les contenus média.

Dans un service de streaming, il est classique d'avoir un ou plusieurs réseaux de diffusion de contenus ou CDN (pour *« Content Delivery Network »)* formés de serveurs de contenus mettant à disposition les contenus sous forme de flux unicast. Les contenus disponibles sont décrits dans des fichiers (manifest) descriptifs, dont les appellations varient d'une technologie à l'autre, par exemple « master playlist », « media playlist » ou « manifest » en HLS (« HTTP Live Streaming » d'Apple - nom commercial) ou « MPD » (pour « Media Presentation Description ») en MPEG-DASH. Les utilisateurs finaux, typiquement les lecteurs de contenu, peuvent alors accéder à ces contenus par segments successifs via des requêtes HTTPs unicast, c'est-à-dire HTTP sécurisé, aux adresses URL (pour « Uniform Resource Locator » soit localisateur uniforme de ressource) indiquées dans ces fichiers.

Un même contenu média est classiquement proposé, dans un fichier descriptif, selon plusieurs qualités (par exemple résolutions, niveaux de compression ou débit correspondant, fréquences d'images, sous-titres, audio, options d'accessibilités pour les personnes avec déficience auditive et/ou visuelle, etc.) au choix du lecteur de contenu qui « s'adapte » de façon dynamique en basculant d'une qualité à l'autre, par exemple lorsque la connexion au CDN fluctue. Aussi, le streaming vidéo hybride est-il dit « adaptatif ». Chaque qualité est décrite dans le fichier descriptif sous une piste différente. Le terme « piste » est ainsi utilisé comme synonyme de qualité pour un contenu donné.

Il va de soi qu'un service de streaming n'est efficace que si la liaison de communication entre le client et le serveur ou CDN est maintenue de bonne qualité pendant l'ensemble de la diffusion en continu. Cette liaison passe généralement par l'Internet. Or la connexion à Internet, de qualité fluctuante et réduite, est de plus partagée par un nombre grandissant d'utilisateurs, et pour des usages multiples. Il en résulte une connexion Internet généralement dégradée pour un utilisateur individuel, en particulier pour des applications nécessitant un usage intensif et permanent de données.

Si la qualité de la liaison diminue, le lecteur de contenu est enclin à basculer sur une piste de qualité moindre telle que proposée dans le fichier descriptif.

Un domaine dans lequel les liaisons de communication fluctuent fréquemment dans le temps concerne les transports. En effet, un véhicule, lorsqu'il se déplace, peut traverser des zones non couvertes par un réseau de communication ou s'éloigner temporairement de stations de bases diminuant la qualité de la communication. A l'inverse, il peut également récupérer une liaison de meilleure qualité à d'autres moments. L'expérience de streaming dans de tels véhicules peut alors se dégrader subitement.

C'est pourquoi il est prévu d'équiper ces véhicules d'un (ou plusieurs) serveur de cache embarqué pour stocker localement les contenus et ainsi permettre aux passagers d'accéder à ceux-ci plus facilement. Un CDN « embarqué » dans le véhicule est donc instancié, lequel gère le serveur de cache et répond aux sollicitations des lecteurs de contenu pour offrir le service de streaming à l'intérieur du véhicule. Pour ce faire, toutes ou partie des pistes dans le fichier descriptif récupéré par le lecteur indiquent un URL du CDN embarqué et non plus d'un CDN externe traditionnel. Le CDN embarqué est donc exposé localement aux lecteurs de contenu présents dans le véhicule.

Les catalogues de contenus peuvent être imposants et les capacités de stockage du serveur de cache embarqué peuvent être limitées, pour des raisons de coût notamment. Aussi, une partie seulement du catalogue est généralement stockée localement dans le serveur embarqué, typiquement les contenus à fort potentiel ou forte audience. Il est également classique que pour certains contenus, une partie seulement de ses pistes (donc des qualités disponibles) soit stockée localement dans le serveur de cache embarqué, typiquement les pistes de faible qualité.

Compte tenu du nombre important d'utilisateurs qui peuvent fréquenter un environnement de transport collectif, il est important de maintenir l'accès à une plus grande partie du catalogue (typiquement l'intégralité) dans toutes ou partie des qualités, par exemple un sous-ensemble comprenant des qualités compatibles avec l'ensemble des lecteurs dans la mesure où certains lecteurs ne sont compatibles qu'avec certaines qualités (notamment en terme de résolution). Aussi, le fichier descriptif conserve-t-il les pistes pour des contenus et qualités non stockés localement dans le CDN embarqué. Un lecteur de contenu opérant dans le véhicule peut donc se retrouver à solliciter le CDN embarqué pour obtenir de segments d'une piste non disponibles localement.

Le CDN embarqué peut alors utiliser une liaison de communication du véhicule vers le ou les CDN externes (typiquement via une liaison sur réseau de téléphonie mobile) pour récupérer les segments manquants.

Le fonctionnement de ce système de streaming n'est toutefois pas satisfaisant. En effet, la liaison de communication en amont vers les CDN externes étant sujette à fluctuations, elle ne garantit pas la récupération à temps de segments sollicités qui ne sont pas disponibles localement. Cet inconvénient s'accentue avec le nombre d'utilisateurs simultanés dans le véhicule car chaque lecteur a tendance à demander la piste compatible de meilleure qualité, qu'elle soit disponible localement ou non. La liaison de communication vers les CDN externes peut devenir rapidement saturée.

Par ailleurs, sur un grand catalogue de contenus, la courbe de répartition des consommations est très étalée, nécessitant un espace de stockage très conséquent pour que les CDN externes soient le moins sollicités possible.

Se pose alors une difficulté de synchronisation du CDN embarqué (dont la quantité de données à synchroniser est très importante, allant au-delà de ce qui peut parfois être techniquement faisable) et des risques de gaspillage compte tenu du nombre de contenus synchronisés qui ne seront jamais lus dans l'environnement de transport collectif.

Il existe donc le besoin d'un système amélioré de streaming qui offre un meilleur contrôle de la consommation des contenus pour réduire le risque de saturation de la liaison de communication en amont, tout en permettant aux lecteurs de contenu de profiter d'une panoplie étendue voire complète des pistes disponibles, et ce sur un catalogue étendu et changeant rapidement. Un tel système serait adapté à un service de streaming embarqué dans un environnement collectif (aéroport, gare, etc.), et notamment dans un environnement de transport collectif tel un véhicule (train, avion, bateau/ferry, car, etc.).

### Exposé de l'invention

Les inventeurs ont constaté que le mécanisme de Content Steering (pilotage de contenu) développé par Apple (https://developer.apple.com/streaming/HLSContentSteeringSpecification.pdf) peut être habilement détourné pour déplacer une partie de l'intelligence de sélection des pistes (qualités) depuis le lecteur de contenu vers les serveurs fournissant le service de streaming.

Le mécanisme de Content Steering a été développé pour permettre d'affecter les clients à différents serveurs ou CDN afin de mieux répartir la charge entre serveurs, notamment en cas d'affluence. Un fichier manifest de pilotage ou « Steering manifest » est obtenu par les lecteurs de contenu auprès d'un serveur dédié pour un contenu demandé.

En pratique, le fichier manifest de pilotage définit un ordre de priorité entre différents « pathway IDs » (identifiants de chemin) qui sont renseignés au niveau de chaque piste du fichier manifest descriptif de contenu, les pistes indiquant des URLs vers des serveurs variés. Un lecteur est alors contraint de basculer entre les seules pistes affectées du pathway ID de plus haute priorité.

Le lecteur passe donc d'un « chemin » (pathway) à un suivant, selon l'ordre des priorités dans le fichier manifest de pilotage lorsque toutes les pistes d'un chemin utilisé déclenchent des erreurs de lecture. Le lecteur bascule ainsi d'une piste non accessible correspondant à un URL sur un serveur à une autre piste opérationnelle ciblant l'URL d'un autre serveur. L'ensemble des pistes du fichier descriptif vers lesquelles le client est autorisé à passer est alors limité à celles affectées du pathway ID sélectionné par le lecteur.

Constatant que le fichier manifest de pilotage permet d'orienter le client vers des pistes particulières au détriment d'autres, les inventeurs ont envisagé d'utiliser les chemins, non plus pour orienter les lecteurs vers des serveurs particuliers, mais pour contrôler les pistes, et donc les qualités - notamment maximales -, auxquelles les lecteurs peuvent prétendre. Aussi, le fichier manifest de pilotage peut être modifié dynamiquement pour renseigner un chemin (pathway) limitant une qualité maximale (par exemple une seule piste de faible qualité SD). Par voie de conséquence, les lecteurs engagés sur le contenu concerné se voient forcés de basculer sur l'une des pistes correspondant au chemin modifié, offrant par exemple une qualité maximale (piste) réduite. Un contrôle de la qualité des contenus lus par les lecteurs est ainsi déporté hors de ces derniers.

Un contrôle dynamique peut être obtenu en ajustant dynamiquement le fichier manifest de pilotage selon les conditions d'utilisation du service (contenus fortement demandés) et selon les conditions de réseau de la liaison de communication (difficulté ou impossibilité de charger à la volée des segments manquants) pour favoriser ou forcer la lecture de certaines pistes disponibles en serveur de cache.

Dans ce dessein, il est proposé un système de streaming adaptatif d'un contenu média disponible dans une pluralité de qualités, comprenant un serveur de pilotage configuré pour transmettre, à chaque sollicitation d'un lecteur de contenu, un fichier manifest de pilotage définissant une liste ordonnée d'un ou plusieurs identifiants de chemin associés à des pistes descriptives dudit contenu média selon plusieurs qualités pour prioriser l'accès aux pistes par le lecteur de contenu selon ledit ordre de la liste, chaque piste référençant un URL où accéder aux segments média de la qualité correspondante,
**caractérisé en ce que** le serveur de pilotage est configuré pour modifier, en fonction d'une qualité cible courante, la liste ordonnée d'identifiants de chemin pour un prochain fichier manifest de pilotage à transmettre au lecteur de contenu.

Le système opère ainsi un contrôle dynamique des qualités accessibles par les lecteurs de contenu, et notamment d'une qualité maximale accessible, en activant ou désactivant les CDN correspondants (via leur identifiant de chemin). Ce contrôle dynamique est réalisé en fonction d'une qualité cible souhaitée qui fluctue dans le temps, par exemple au grès de l'arrivée de nouveaux clients et/ou de l'usage et de la qualité variables de la liaison de communication vers les CDN externes.

Les pistes de qualité moindre étant moins consommatrices de bande passante, le contrôle dynamique vers une qualité cible moindre peut permettre de réduire la sollicitation de la liaison de communication et d'augmenter la profondeur de pré-caching (quantité de données stockée dans le serveur de cache embarqué). L'expérience utilisateur s'en trouve améliorée.

Les clients peuvent ainsi être forcés à lire les mêmes pistes, typiquement celles disponibles en serveur de cache, ou un nombre restreint de pistes, allégeant par exemple la charge du CDN embarqué à charger, en cache, les segments manquants d'une piste qu'un lecteur aurait sélectionnée autrement. Cela permet par exemple de maximiser la lecture sans interruption du contenu média par les lecteurs tout en maximisant la qualité lue, selon l'état du serveur de cache, l'utilisation du service (par exemple le nombre de clients) et la connectivité avec les CDN externes.

Corrélativement, il est également proposé un procédé de streaming adaptatif d'un contenu média disponible dans une pluralité de qualités, comprenant la transmission, par un serveur de pilotage à chaque sollicitation d'un lecteur de contenu, d'un fichier manifest de pilotage définissant une liste ordonnée d'un ou plusieurs identifiants de chemin associés à des pistes descriptives dudit contenu média selon plusieurs qualités pour prioriser l'accès aux pistes par le lecteur de contenu selon ledit ordre de la liste, chaque piste référençant un URL où accéder aux segments média de la qualité correspondante,
**caractérisé en ce qu'**il comprend une étape additionnelle, par le serveur de pilotage, de modification, en fonction d'une qualité cible courante, de la liste ordonnée d'identifiants de chemin pour un prochain fichier manifest de pilotage à transmettre au lecteur de contenu.

Des caractéristiques facultatives des modes de réalisation de l'invention sont définies dans les revendications annexées. Certaines de ces caractéristiques sont expliquées ci-dessous en référence à un système, tandis qu'elles peuvent être transposées en caractéristiques de procédé.

Dans un mode de réalisation, des identifiants de chemin différents sont associés à des jeux (ou groupes) différents d'une ou plusieurs pistes du même contenu média, chaque jeu présentant une qualité maximale différente, et la modification de la liste ordonnée d'identifiants de chemin comprend (1) la sélection d'un des identifiants de chemin en fonction des qualités maximales des jeux associés et de la qualité cible courante, et (2) la priorisation de l'identifiant de chemin sélectionné dans ladite liste ordonnée. Une gestion des identifiants de chemin par jeux ayant une qualité maximale différente simplifie les opérations de modification de la liste ordonnée, notamment pour limiter la qualité maximale accessible par les lecteurs à ladite qualité cible courante.

Dans un mode de réalisation, deux pistes de même qualité dans deux jeux différents référencent la même URL ou le même fichier média (via par exemple deux URLs ciblant le même fichier physique), et cela contrairement à l'utilisation conventionnelle du Steering Manifest. C'est donc la même piste qui est présente dans les deux jeux. Cette configuration permet d'utiliser le même fichier média pour deux Pathway ID, et par conséquent de limiter l'utilisation de ressources de stockage. Cette configuration est donc particulièrement bien adaptée à un service de streaming embarqué dans un véhicule. Une même piste ou un même fichier (par exemple celle ou celui de plus faible qualité) peut peupler un grand nombre de jeux concurrents.

Dans un mode de réalisation, un premier jeu présentant une première qualité maximale comporte la ou les pistes d'un deuxième jeu et une piste additionnelle de qualité égale à la première qualité maximale. Dans cette configuration, l'ajustement dynamique selon l'invention permet de supprimer ou d'ajouter uniquement la piste additionnelle de qualité maximale lorsque la qualité cible varie d'une qualité maximale à la suivante, assurant que les autres pistes de qualité moindre sont toujours disponibles aux lecteurs.

A titre d'exemple, n jeux Jₖ de qualité maximale Qₖ comprennent k pistes de qualité Q₁ à Qₖ, avec k un entier de 1 à n, et Qᵢ<Qⱼ pour i<j. A titre d'illustration, un premier jeu J₁ est formé de la piste Q₁ (par exemple SD pour « small definition » ou « faible définition »), un deuxième jeu J₂ des pistes Q₁ et Q₂ (par exemple SD et HD Ready), un troisième jeu J₃ des pistes Q₁, Q₂ et Q₃ (par exemple SD, HD Ready et full HD) et un quatrième J₄ jeu des pistes Q₁, Q₂, Q₃ et Q₄ (par exemple SD, HD Ready, full HD et UHD).

Bien entendu, d'autres configurations peuvent être contemplées telles que des jeux J'ₖ comprenant uniquement les pistes Q₁ et Qₖ. Il est également possible de combiner des jeux Jₖ et J'ₖ pour concentrer le cache sur certaines pistes (celles de J'ₖ).

Dans ces cas, les pistes de qualité Qᵢ peuvent référencer le même URL ou le même fichier média dans les n jeux Jₖ (voire J'ₖ). Cela permet notamment de ne pas démultiplier les fichiers média sur les serveurs pour une même qualité de contenu. Cette configuration est donc particulièrement bien adaptée à un service de streaming embarqué dans un véhicule où les capacités de stockage local sont limitées.

Dans un mode de réalisation, lesdits jeux présentant des qualités maximales différentes comprennent uniquement des pistes référençant un URL d'un serveur de cache embarqué dans un véhicule, et au moins un jeu additionnel de pistes, associé à un identifiant de chemin distinct, référence un URL de serveur de diffusion unicast de contenus externe au véhicule. Cette disposition favorise la consommation des médias via le serveur de cache embarqué, tout en garantissant un accès aux contenus externes pour les utilisateurs lorsque le serveur de cache (et donc le service de streaming embarqué) dysfonctionne ou que sa connexion avec le système embarqué est perdue ou que l'utilisateur quitte le véhicule.

Dans un mode de réalisation, les pistes descriptives référençant un URL du serveur de cache embarqué sont incluses dans un fichier manifest descriptif de contenu transmis par un serveur de manifest et/ou sont générées par le lecteur de contenu par clonage (ou « pathway cloning ») d'un ou plusieurs chemins existant dans un fichier manifest de contenu transmis par le serveur de manifest. Cela signifie également que certaines de ces pistes peuvent être incluses directement dans le fichier lorsque d'autres sont générées par clonage.

Dans un mode de réalisation, la liste ordonnée d'identifiants de chemin est modifiée pour comprendre, dans l'ordre de priorité, un unique identifiant de chemin affecté à un jeu de pistes référençant un URL d'un serveur de cache embarqué dans un véhicule et sélectionné en fonction de la qualité cible courante, puis un ou plusieurs identifiants de chemin affectés à un ou des jeux additionnels de pistes référençant un URL de serveur de contenus externe au véhicule. Les autres jeux de pistes locales (avec URL du serveur de cache embarqué), notamment de qualité maximale supérieure, sont dès lors désactivés, assurant ainsi que les lecteurs ne peuvent pas solliciter des pistes de qualité supérieure à la qualité cible, auprès du serveur embarqué.

Dans un mode de réalisation, les URL référencent un serveur de cache embarqué dans un véhicule. L'invention s'applique particulièrement bien à un service de streaming embarqué dans un véhicule.

Selon une réalisation, le serveur de cache embarqué est un serveur de cache stockant temporairement un ou plusieurs segments du contenu média obtenus auprès d'un serveur externe de diffusion unicast de contenus. Le serveur embarqué sert alors de proxy des media segments.

Selon une réalisation, le serveur de pilotage est externe au véhicule et reçoit, d'un agent de gestion embarqué dans le véhicule, un message indiquant ladite qualité cible courante, par exemple une commande de modification de la liste ordonnée d'identifiants de chemin. Cette disposition permet de garder le mécanisme du Content Steering (ou équivalent), actif même si l'utilisateur s'éloigne du véhicule.

Selon une autre réalisation, le serveur de pilotage est embarqué dans le véhicule, des pistes descriptives dudit contenu média selon plusieurs qualités sont incluses dans un fichier manifest descriptif de contenu transmis par un serveur de manifest externe au véhicule, et le fichier manifest descriptif de contenu référence le serveur de pilotage embarqué comme serveur prioritaire pour l'obtention d'un fichier manifest de pilotage du contenu média et référence un second serveur de pilotage, externe au véhicule, comme serveur de replis pour l'obtention d'un fichier manifest de pilotage du contenu média.

Contrairement à l'usage classique des fichiers manifest de pilotage, on référence ici deux serveurs de pilotage alternatifs. Cette configuration évite l'interruption de rafraîchissement du fichier manifest de pilotage pour le lecteur de contenu par exemple lorsque l'utilisateur quitte le véhicule. En outre, elle permet d'adapter localement (au véhicule) la qualité maximale accessible par les lecteurs présents dans le véhicule, selon des conditions spécifiques à chaque véhicule.

Dans une variante offrant le même avantage, le serveur de pilotage est embarqué dans le véhicule et est exposé localement avec un nom de domaine identique à celui d'un second serveur de pilotage, externe au véhicule. Un DNS ou proxy local du véhicule renvoie alors tout lecteur sollicitant le nom de domaine, vers le serveur de pilotage embarqué. En revanche, dès lors que le lecteur quitte le véhicule, le second serveur de pilotage est sollicité, par le biais du même nom de domaine. Le second serveur peut donc opérer comme serveur de replis pour l'obtention d'un fichier manifest de pilotage. On évite ainsi également l'interruption de rafraîchissement du fichier manifest de pilotage.

Dans un mode de réalisation, le serveur de pilotage ou un agent de gestion embarqué dans le véhicule est configuré pour déterminer la qualité cible courante en fonction d'un état de disponibilité des pistes sur un serveur de cache embarqué dans le véhicule et/ou d'une bande passante disponible sur une liaison de communication entre le véhicule et un serveur externe de contenus. L'état de disponibilité peut concerner la disponibilité totale du fichier média (l'ensemble des segments) sur le serveur ou la disponibilité d'une partie au moins des segments média. La modification du fichier manifest de pilotage est ainsi rendue plus simple et plus précise en raison d'une connaissance en temps réel (et meilleure) du statut du serveur de cache (pistes stockées, état du caching en cours pour certaines pistes) et de l'état de la liaison de communication vers l'extérieur (interruption, saturation, bande passante disponible).

Par exemple, le serveur ou agent peut déterminer si la bande passante disponible permet de récupérer, sur le serveur de cache embarqué, l'ensemble des segments manquants d'une qualité cible courante (i.e., en cours de streaming) du contenu média compte tenu d'une position de lecture en cours du contenu média et sans rattraper la fin du cache, et en cas de détermination négative, réduire la qualité cible courante, par exemple vers la qualité du contenu média permettant de récupérer l'ensemble de ses segments manquants. De façon symétrique, le serveur ou agent peut déterminer si la bande passante disponible permet de récupérer, sur le serveur de cache embarqué, l'ensemble des segments manquants d'une qualité supérieure (en termes de débit / résolution) à la qualité en cours de lecture du contenu média compte tenu d'une position de lecture en cours du contenu média et sans rattraper la fin du cache, et en cas de détermination positive, augmenter la qualité cible courante vers la qualité supérieure.

A titre d'autre exemple, il peut s'agir de détecter qu'une nouvelle piste est mise en cache dans le serveur de cache embarqué, et utiliser la qualité de la nouvelle piste comme qualité cible courante. Cette disposition permet aux clients (lecteurs de contenu) de monter en qualité, sans altérer la liaison de communication vers les serveurs externes utilisée pour la mise en cache d'autres pistes ou contenus média par exemple.

A titre d'autre exemple, il peut s'agir de détecter la suppression d'une piste du serveur de cache embarqué (par exemple pour libérer de l'espace mémoire pour d'autres contenus à mettre en cache), et utiliser la meilleure qualité disponible pour le contenu média restant sur le serveur de cache embarqué comme qualité cible courante. Cette disposition permet de forcer les clients à quitter une piste supprimée du cache.

A titre d'autre exemple encore, il peut s'agir de déterminer une bande passante disponible pour le contenu média dans une liaison de communication entre le véhicule et le serveur de cache embarqué, déterminer une piste présentant le meilleur débit (débit indiqué dans le fichier manifest descriptif) sous la bande passante déterminée, et utiliser la qualité associée à la piste déterminée comme qualité cible courante. Cette disposition permet d'ajuster dynamiquement la meilleure qualité pour les clients même en l'absence de caching des contenus sur un serveur de cache. Une telle disposition s'applique en particulier à des contenus « live » (en direct) pour lesquels un précaching n'est pas possible.

La présente invention vise également un programme informatique comportant des instructions pour la mise en œuvre du procédé ci-dessus, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

L'invention vise également un support d'enregistrement non transitoire lisible par un ordinateur sur lequel est enregistré un programme pour la mise en œuvre du procédé ci-dessus, lorsque ce programme est exécuté par un processeur.

Au moins une partie des procédés selon l'invention peut être mise en œuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en œuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
[Fig. 1] représente schématiquement un exemple de système de streaming vidéo adaptatif ;
[Fig. 2] illustre un exemple de fichier manifest descriptif ou « manifest » racine pour un contenu média ;
[Fig. 2a] illustre une extension du ficher de la Figure 2 à des pistes d'un CDN local accessible sur un serveur embarqué dans un véhicule ;
[Fig. 2b] illustre une extension supplémentaire du fichier des Figure 2 et Figure 2a à des pistes d'autres CDN virtuels locaux accessibles sur le serveur embarqué ;
[Fig. 3] illustre un exemple de fichier manifest de pilotage ou « steering manifest » référençant des CDN externes ;
[Fig. 3a] illustre un « steering cloning » ou clonage de pistes à l'aide d'un fichier manifest de pilotage ;
[Fig. 3b] illustre une variante de « steering cloning » ;
[Fig. 4a] [Fig. 4b] [Fig. 4c] [Fig. 4d] illustrent différents fichiers manifest de pilotage référençant chacun un CDN virtuel local et/ou un unique CDN externe pour limiter une qualité maximale de lecture ;
[Fig. 5] illustre schématiquement des étapes d'opérations du système de streaming de la Figure 1 ;
[Fig. 6] illustre schématiquement des étapes d'opérations d'un lecteur de contenu dans le système de streaming de la Figure 1 ;
[Fig. 7] illustre schématiquement des étapes de suivi et de mise à jour de la qualité cible courante d'un contenu média, pour piloter le CDN virtuel activé ; et
[Fig. 8] représente une variante de système de streaming vidéo adaptatif.

### Description détaillée

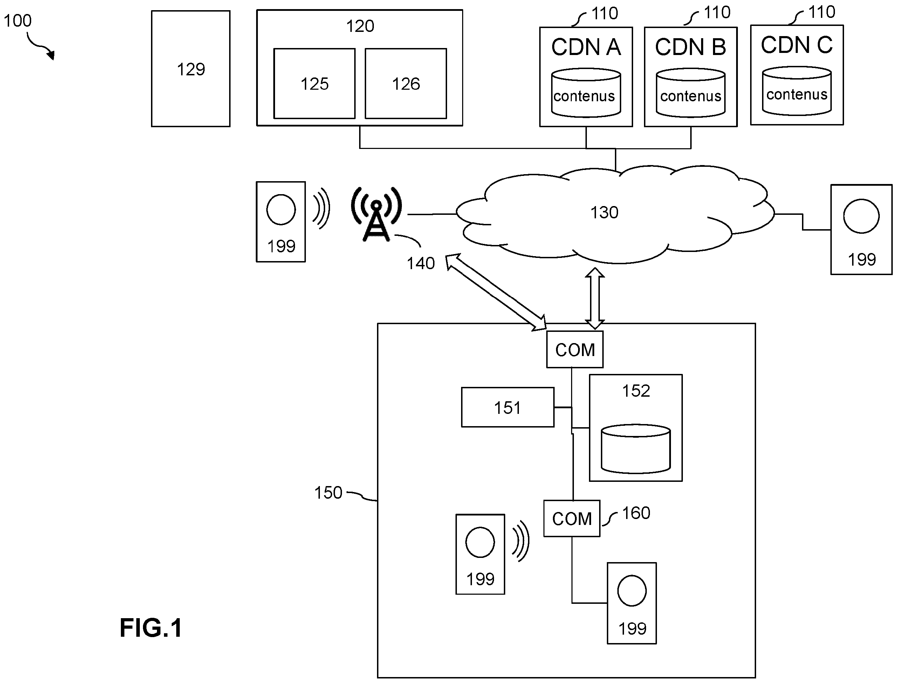

La **Figure 1** illustre un système de streaming (ou « diffusion continue ») adaptatif 100 de contenus média, tels de la vidéo à la demande (VOD). Seuls les équipements et fonctions utiles aux explications ci-dessous sont illustrés, pour simplifier les explications. Néanmoins, l'homme de l'art reconnaitra les équipements ou fonctions additionnelles qui sont classiquement utilisés pour le fonctionnement d'un système de streaming.

La représentation des équipements et fonctions est purement schématique. Un bloc ou module illustré peut être mis en œuvre au sein d'un ou plusieurs équipements physiques (type serveurs). De même, deux ou plusieurs blocs/modules illustrés peuvent être mis en œuvre au sein d'un même équipement physique.

Le système 100 comprend de façon classique un ou plusieurs réseaux publics de diffusion unicast de contenus ou « CDN » 110, un ou plusieurs serveurs 120, un réseau de communication 130 auquel sont connectés les serveurs 110, 120 et auquel peuvent se connecter des terminaux clients dotés de lecteurs de contenus 199, et un réseau alternatif de communication par exemple un réseau de téléphonie mobile 140 interfaçant certains terminaux client avec le réseau 130.

Un CDN 110 comporte un ou plusieurs serveurs pour le stockage de contenus multimédia dans un format permettant leur diffusion en continu (streaming). Un contenu multimédia peut correspondre à un film, un documentaire, un épisode de série, un événement en direct (sportif ou non), etc.

Typiquement, un contenu média initial est encodé selon des résolutions ou qualités différentes, par exemple en une version 4K ou ultra haute définition (UHD), une version Full HD (FHD), une version haute définition (HD) et une version basse définition (SD). Bien entendu, un nombre différent de versions peut être produit ainsi que d'autres définitions. De façon similaire à ces exemples de qualités vidéo différentes, des qualités différentes peuvent être proposées pour des pistes audio. Ainsi, le contenu média initial (film, documentaire, événement sportif, etc.) peut donner naissance à N (entier) fichiers média accessibles aux utilisateurs dans le système de streaming 100.

De façon connue, un grand nombre de critères peut être utiliser pour différencier plusieurs fichiers média issus d'un même contenu média initial : par exemple, résolution, qualité, fréquence de trame, codec, langue audio, sous-titre, etc.

Les fichiers média ainsi produits sont fragmentés (empaquétés) en segments média unicast qui satisfont un format de streaming unicast. Typiquement, les segments média d'un même fichier média portent le même nom de fichier complété par exemple d'un compteur s'incrémentant.

Les segments média (donc le fichier média d'une qualité donnée) sont stockés sous ces noms de façon permanente dans les serveurs du CDN pour permettre un accès à la demande (VOD). De façon alternative, ils sont générés (encodés) à la volée, typiquement lors d'événements en direct, auquel cas ils sont stockés sous ces noms de façon temporaire dans les serveurs du CDN. Un serveur peut stocker à la fois des segments de façon permanente et des segments de façon temporaire.

La Figure illustre trois CDN 110 pour la diffusion unicast des segments média correspondant aux différentes qualités de contenus média accessibles dans le système de streaming représenté. Bien entendu, un nombre différent d'un ou plusieurs CDN est envisageable.

Pour une diffusion en direct, les segments média créés peuvent être stockés pour une durée limitée permettant un « retour en arrière » de l'utilisateur. Ce mécanisme de retour en arrière est également connu sous l'appellation de « startover ».

La suite de la description se concentre principalement sur un contenu média initial encodé selon les trois ou quatre résolutions ci-dessus. Bien entendu, des considérations similaires s'appliquent à tous les contenus média disponibles dans le système 100, peu important les critères (résolution, qualité, etc.) de création des 1 à N fichiers média correspondants.

Il est à noter, en outre, que si par la suite la description se concentre sur la diffusion vidéo, des considérations similaires s'appliquent aux autres composantes d'un service multimédia, typiquement les pistes audio, sous-titrages, données interactives, etc.

Le ou les serveurs 120 stockent les fichiers de description 125 des différents contenus stockés sur les CDN 110 et accessibles aux utilisateurs. Ces serveurs réalisant la fonction de fourniture des fichiers de description 125 sont appelés serveurs de fichiers descriptifs ou « manifest ».

De façon connue, un fichier descriptif racine est généré pour chaque contenu multimédia (par exemple une chaîne TV, un titre VOD). Ce fichier de description est appelé « manifest » ou MPD dans le protocole MPEG DASH *(« Moving Picture Experts Group Dynamic Adaptive Streaming over HTTP »* - nom commercial) et « liste de lecture maître » *(« master playlist* ») dans le protocole HLS (pour « *HTTP Live Streaming »).* Le fichier descriptif racine est typiquement généré une unique fois pour un contenu média VOD. Il peut cependant être généré dynamiquement pour adapter les qualités à chaque dispositif utilisateur et/ou aux conditions de réseau. Celui d'événements filmés en direct est généré dynamiquement.

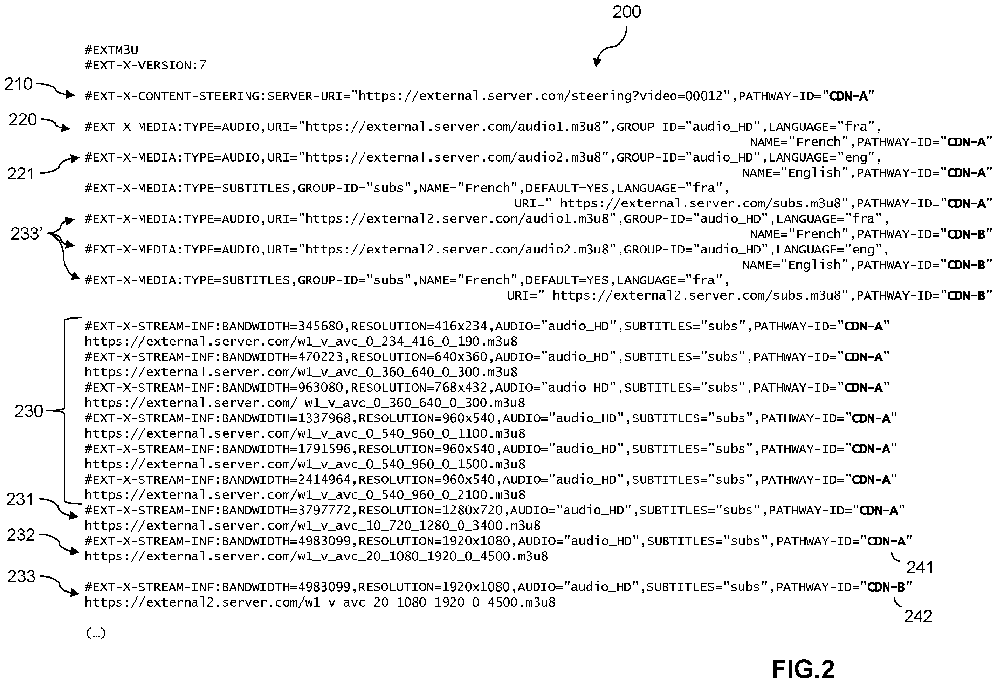

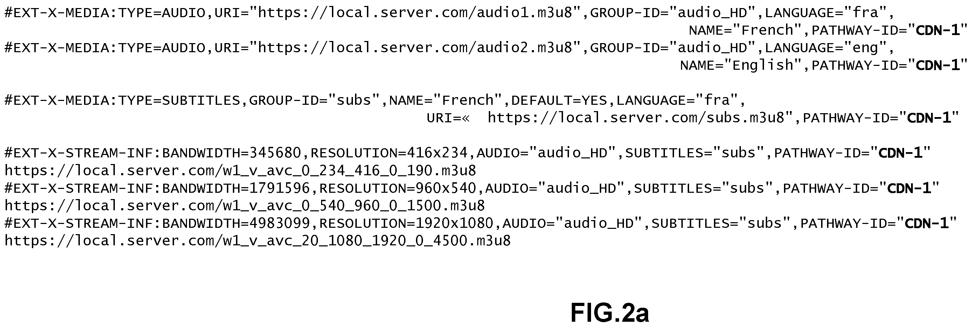

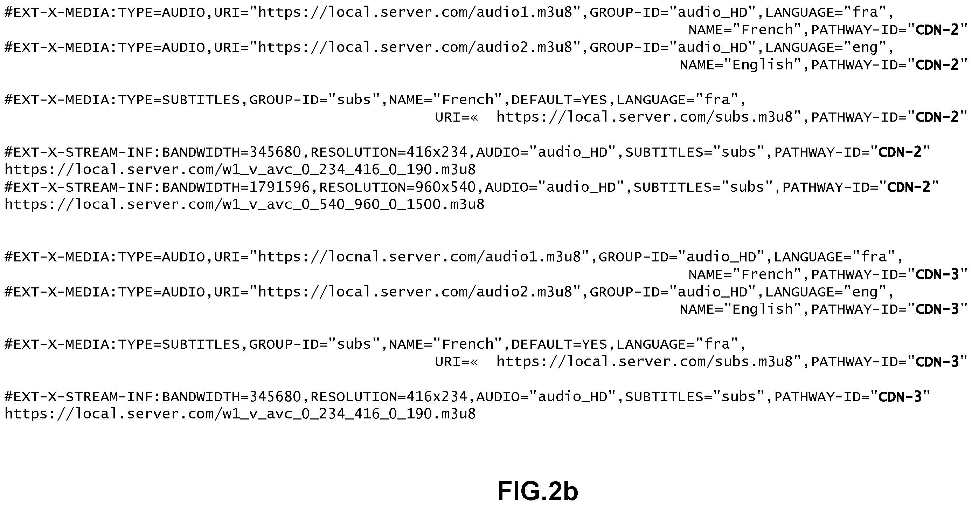

Un exemple de fichier descriptif racine 200 est illustré en **Figure 2** au format HLS. Ce fichier est simplifié aux éléments utiles, pour des raisons de clarté. En pratique, d'autres attributs sont précisés pour les pistes disponibles. Le fichier descriptif racine comprend des metadata (sur les lignes commençant par la balise #) dont certaines définissent une pluralité de pistes qui correspondent aux différents fichiers média disponibles sur le CDN 110, et donc aux différentes qualités accessibles. Chaque piste est composée d'une ligne de metadata spécifiant des attributs de ladite piste et d'une seconde ligne indiquant l'URL d'un fichier associé, descriptif des segments média constituant le fichier média.

Dans cet exemple, la piste 220 définit un contenu audio en français, dont un détail des segments média est fourni dans le fichier descriptif de piste « audio1.m3u8 » stocké sur le serveur « external.server.com » du CDN. De même, la piste 221 définit un contenu audio en version originale, dont un détail des segments média est fourni dans le fichier « audio2.m3u8 ».

Les pistes 230 définissent des contenus vidéo en basse résolution SD avec des paramètres distincts tels la résolution (416 pixels x 234 pixels, 640x360, 768x432, 960x540) ou le débit encodé (« bandwidth »). Un détail des segments média correspondant est fourni dans respectivement les fichiers « w1_v_avc_0_234_416_0_190.m3u8 », « w1_v_avc_0_360_640_0_300.m3u8 », « w1_v_avc_0_360_640_0_300.m3u8 », « w1_v_avc_0_540_960_0_1100.m3u8 », « w1_v_avc_0_540_960_0_1500.m3u8 », « w1_v_avc_0_540_960_0_2100.m3u8 » stockés sur le serveur « external.server.com ». De même, la piste 231 définit un contenu vidéo en haute résolution HD (1280x720), dont un détail des segments média est fourni dans le fichier « w1_v_avc_10 720_1280 0 3400.m3u8 » stocké sur le même serveur. La piste 232 définit un contenu vidéo en Full HD (1920x1080), dont un détail des segments média est fourni dans le fichier « w1_v_avc_20_1080_1920_0_4500.m3u8 » stocké sur le même serveur.

A chaque piste alternative dans le fichier descriptif 200 correspond donc un second fichier descriptif de contenu « m3u8 », ou « fichier descriptif de piste » ou « media playlist », qui indique les adresses web URL où le lecteur de contenu 199 obtient, par requêtes unicast, les différents segments média constituant le contenu/la piste correspondante. Ce fichier comprend un grand nombre d'éléments descriptifs correspondant à des segments média respectifs, chaque élément descriptif précisant l'URL (relatif si sur le même serveur ou absolu sinon) où est stocké le segment média correspondant. En d'autres termes, ce fichier est basiquement une playlist d'URLs.

Le cas du format DASH est légèrement différent. Le fichier descriptif racine MPD de DASH liste les différentes qualités / pistes disponibles et comporte directement, pour chacune de ces qualités / pistes, les URL où le lecteur de contenu 199 obtient, par requêtes unicast, les différents segments média de la piste. Aussi, dans le format DASH, il n'y a pas de fichier descriptif de piste; le fichier racine MPD fusionne, en un seul fichier, à la fois le fichier master playlist de HLS et les multiples fichiers media playlists HLS correspondants. Les URL peuvent être des adresses absolues pour le cas où les segments média sont stockés sur un autre serveur que celui délivrant le fichier racine MPD.

Les fichiers descriptifs sont obtenus par le lecteur de contenu 199 sur requêtes auprès du serveur 120. De façon connue, le lecteur de contenu 199 demande le fichier descriptif racine 200 d'un contenu multimédia auquel il souhaite accéder, sélectionne l'une des pistes selon la qualité/résolution souhaitée (ou supportée) et demande, dans le cas HLS, le fichier descriptif de piste correspondant à la piste sélectionnée. C'est alors qu'il peut solliciter le CDN 110 (par requêtes unicast) pour obtenir les segments média successifs auprès du CDN, typiquement pour une piste audio, une piste vidéo et optionnellement une piste de sous-titre.

Le ou les serveurs 120 stockent également des fichiers descriptifs de pilotage ou « Content Steering » 126 pour les contenus média. Ces serveurs réalisant la fonction de fourniture des fichiers de pilotage 126 sont appelés serveurs de pilotage.

Serveurs de manifest et de pilotage peuvent être mis en œuvre au sein d'un même serveur physique 120 ou d'un groupe des mêmes serveurs physiques. En variante, serveur de manifest et serveur de pilotage sont mis en œuvre au sein de serveurs physiques distincts. Pour la suite, il est fait référence de façon générique au serveur 120, dont la fonction utilisée (manifest ou pilotage) apparaitra à la lumière de la description.

Le mécanisme de Content Steering est décrit par exemple dans le fichier https://developer.apple.com/streaming/HLSContentSteeringSpecification.pdf. Il permet, entre autres, de prioriser l'accès à un CDN 110 plutôt qu'à l'autre.

Un fichier Content Steering 126 est récupéré par le lecteur de contenu 199 à l'URL indiquée dans l'élément descriptif de balise EXT-X-CONTENT-STEERING (210) du fichier descriptif racine 200 dans le cas illustré HLS. Le fichier Content Steering 126 est spécifique au contenu multimédia, celui identifié par le paramètre 'video' (video=00012 dans l'exemple de la Figure).

Le fichier Content Steering 126 opère en collaboration avec un attribut dénommé « PATHWAY-ID » indiqué au niveau des pistes du fichier descriptif racine 200 afin de prioriser des pistes (celles portant un PATHWAY-ID spécifique) par rapport à d'autres pistes, et de façon indirecte de prioriser un CDN 110 (« external.server.com » dans l'exemple de la **Figure 2****)** plutôt que d'autres CDN. En d'autres termes, l'attribut « PATHWAY-ID » n'est autre qu'un attribut de priorisation des pistes, et donc indirectement des chemins vers les CDN.

Pour illustrer ce fonctionnement, le fichier descriptif 200 comprend également une piste 233 similaire à la piste Full HD 232, si ce n'est que le fichier descriptif de piste (et les segments média) est stocké sur le serveur d'un autre CDN, ici « external2.server.com ». De même, les pistes 233' définissent les mêmes pistes audio et de sous-titrage, disponibles sur l'autre CDN « external2.server.com ». Les pistes 230-232 sont affectées de l'attribut PATHWAY-ID = CDN-A 241 alors que les pistes 233 et 233' sont affectées de l'attribut PATHWAY-ID = CDN-B 242.

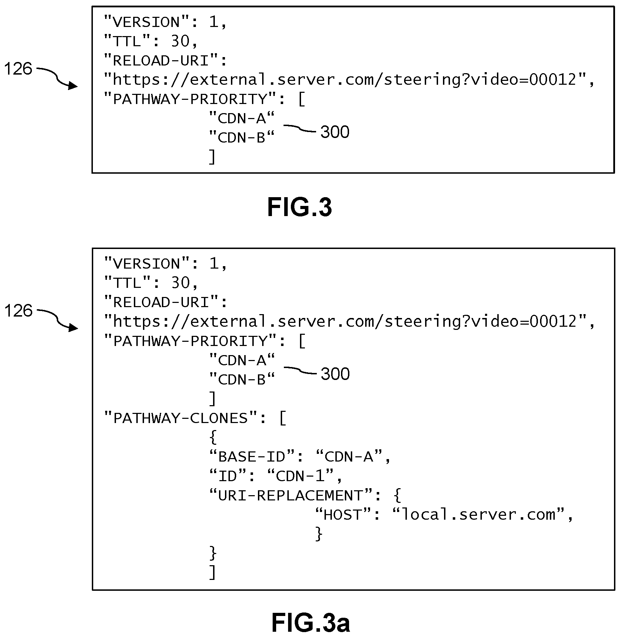

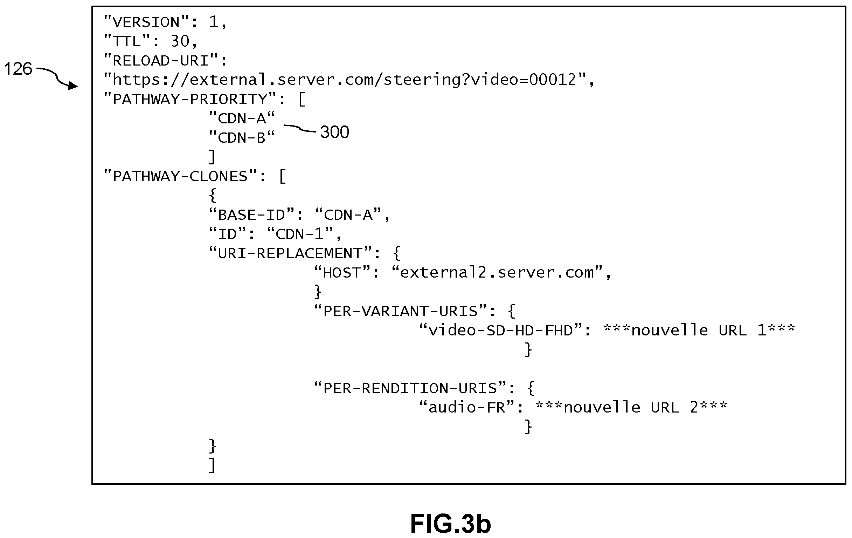

La **Figure 3** illustre un exemple de fichier Content Steering 126, dans lequel la liste ordonnée d'identifiants de chemin 300 définit l'ordre de priorité des CDN, ici le CDN-A de façon prioritaire par rapport au CDN-B.

Aussi, lorsque, comme illustré sur la **Figure 2****,** des pistes sont déclarées avec des attributs PATHWAY-ID 241, 242 différents, l'un égal à « CDN-A » et l'autre à « CDN-B », le lecteur de contenu utilisateur 199 exploitant ce fichier descriptif racine 200 est autorisé à basculer entre les pistes « CDN-A » uniquement (les pistes 220, 221, 230, 231, 232 de la Figure), et passer aux pistes « CDN-B » (les pistes 233, 233') uniquement si aucune piste « CDN-A » n'est disponible. Le lecteur de contenu 199 sollicite donc, dans un premier temps, uniquement le serveur « external.server.com ».

Dans le cas inverse où la liste ordonnée 300 définit CDN-B de façon prioritaire par rapport au CDN-A, l'exemple de la **Figure 2** impose d'abord l'utilisation des pistes 233 et 233', au lecteur 199.

A noter qu'en l'absence de fichier Content Steering 126 (non disponible ou pas encore obtenu ou chargé), un attribut est défini par défaut comme prioritaire, en fin de l'élément descriptif 210. Dans l'exemple, « CDN-A » est l'attribut par défaut des pistes prioritaires. En variante (e.g. en l'absence d'un tel attribut par défaut, ou si celui-ci n'est pas présent dans des pistes alternatives), l'ordre des pistes dans le fichier descriptif racine 200 peut être pris comme ordre de priorité par défaut.

Le fichier Content Steering 126 transmis aux lecteurs varie dans le temps, par exemple pour orienter certains lecteurs vidéo utilisateurs vers un CDN 110 plutôt qu'un autre, et ainsi équilibrer la charge entre CDN. Le fichier Content Steering 126 est rechargé par le lecteur de contenu utilisateur 199 (par requêtes successives auprès du serveur 120) de façon périodique, toutes les TTL secondes tel qu'indiqué dans le fichier 126. Dans l'exemple de la **Figure 3****,** TTL est fixé à 30.

Le même format de fichier Content Steering 126 est utilisé dans le protocole HLS et le protocole DASH, seuls les attributs PATHWAY-ID étant définis à des emplacements différents dans les fichiers descriptifs de contenu 125. En DASH, il peut être défini dans chaque balise <BaseURL> précisant l'URL de base d'un CDN, comme cela est proposé dans la contribution DASH « Content Steering for DASH », version 0.9.0 en date du 10 juillet 2022, disponible sur https://dashif.org/docs/DASH-IF-CTS-00XX-Content-Steering-Community-Review.pdf. A nouveau, le PATHWAY-ID permet de prioriser différents chemins aux contenus.

De retour à la **Figure 1****,** les CDN 110 sont des infrastructures classiques basées sur HTTP, typiquement des serveurs standard DASH ou HLS sécurisés (donc HTTPs). Ils réalisent une diffusion/streaming unicast des contenus, c'est-à-dire qu'ils délivrent les segments médias sur requête des lecteurs de contenu utilisateurs.

Les requêtes et segments média renvoyés transitent au travers du réseau public de communication 130 typiquement le réseau Internet, possiblement via un autre réseau de communication, par exemple un réseau de téléphonie mobile 140 pour le cas où le lecteur de contenu utilisateur équipe un terminal utilisateur de type téléphone connecté au réseau 140.

La **Figure 1** illustre une adaptation du système à un environnement collectif (aéroport, gare, etc.), et notamment à un environnement mobile type transport collectif tel qu'un véhicule (train, avion, bateau/ferry, car, etc.). Bien qu'il ne soit représenté qu'un seul environnement collectif 150, plusieurs peuvent exister simultanément dans lesquels des utilisateurs ont accès au service de streaming tel que décrit par la suite. Typiquement plusieurs trains peuvent opérer simultanément. La suite de la description s'appuie sur un environnement mobile de type train à des fins illustratives seulement. Elle s'applique donc à tout autre environnement mobile.

Comme illustré sur la Figure, le train 150 comprend un agent de streaming 151, un serveur de cache de contenus média 152 et un ou plusieurs terminaux utilisateur dotés de lecteurs de contenu 199, ainsi qu'un réseau de communication local 160 auquel sont connectées ces différentes entités. Le réseau de communication local 160 peut être filaire ou non, typiquement un réseau Wifi (nom commercial) embarqué. Le train est par ailleurs connecté à un réseau de communication externe, tel le réseau 130 ou 140, lui donnant accès aux serveurs externes 110 et 120.

Par la suite, la notion de « local » se rapporte aux éléments et opérations embarqués dans le train 150 par opposition aux éléments et opérations des serveurs 110 et 120.

Un terminal utilisateur peut prendre la forme d'un téléphone intelligent (smartphone), d'une tablette, d'un ordinateur portable ou de bureau, d'un objet connecté (télévision, montre, appareil photo, lunettes connectées, etc.). Un terminal utilisateur est relié au réseau local par liaison filaire (câble Ethernet) ou sans-fil (wifi). Un terminal utilisateur, typiquement un téléphone ou une tablette, peut en outre être connectée au réseau de téléphonie mobile 140 (notamment lorsque l'utilisateur sort du train, mais également en continu si le téléphone décide de récupérer certains fichiers via réseau cellulaire). Un tel terminal a donc la possibilité de basculer d'un réseau (local) à l'autre (mobile).

L'accès au service de streaming par les lecteurs de contenu utilisateurs 199 peut se faire à l'aide d'une application dédiée de lecture exécutée sur le terminal utilisateur ou au travers d'un navigateur web du terminal utilisateur qui exécute ledit lecteur vidéo. Par exemple, un téléphone connecté au réseau de téléphonie mobile 140 accède au service de streaming de façon classique par requêtes unicast vers le CDN (pour récupérer les fichiers manifest 125, 126 puis les segments média).

Le serveur de cache 152 est, à l'instar des CDN 110, un serveur local de streaming, c'est-à-dire de diffusion unicast de segments média correspondant aux contenus accessibles localement. Pour ce faire, il instancie un serveur web local pour répondre aux requêtes unicast des lecteurs de contenu 199. Le serveur web local peut être un simple serveur http ou être monté en serveur HTTPs, c'est-à-dire sécurisé, idéalement HTTPs/2 ou HTTPs/3 avec TLS 1.3 ou ultérieur.

Les contenus accessibles localement correspondent à des contenus média proposés par les CDN externes 110, même si d'autres contenus peuvent être prévus à usage local seulement.

Des pistes disponibles localement peuvent ainsi correspondre à toute ou partie des pistes disponibles sur les CDN externes 110, pour un contenu média donné. Le serveur web local stocke donc des fichiers manifest descriptifs de piste correspondant aux pistes disponibles localement, et stocke également des segments média de ces pistes.

La **Figure 2a** illustre un exemple de suite du fichier manifest racine 200 de la **Figure 2** pour déclarer des pistes disponibles localement dans le train.

Dans cet exemple, le serveur web local du serveur de cache 152 est exposé sur le réseau local avec un nom de domaine dédié, ici « local.server.com » lequel peut être exposé publiquement ou ne pas être exposé publiquement. L'usage d'un nom de domaine permet un déploiement à l'identique des qualités dans plusieurs trains par une seule déclaration des pistes dans le fichier manifest racine 200 (tous les trains instancient un serveur web local avec le même nom de domaine dédié). En variante à un nom de domaine entièrement qualifié (FQDN), une adresse IP peut être utilisée, laquelle nécessite une déclaration de chaque piste, spécifique à chaque train dans le fichier manifest racine 200.

L'exposition du serveur web sous ce nom de domaine dédié, au sein du réseau local, est rendue possible par son enregistrement (en association avec l'adresse IP locale du serveur de cache 152) dans un serveur DNS local.

Dans l'exemple de la **Figure 2a****,** les pistes audio et sous-titres sont reprises en local ainsi que trois pistes vidéo, la piste SD (416x234) dont le fichier manifest de piste est « w1_v_avc_0_234_416_0_190.m3u8 » stocké sur le serveur web local « local.server.com », la piste HD (1280x720) correspondant à la piste 231 et dont le fichier manifest de piste « w1_v_avc_10_720_1280_0_3400.m3u8 » est également stocké sur le même serveur local, et la piste Full HD (1920x1080) correspondant à la piste 232 et dont le fichier manifest de piste « w1_v_avc_20_1080_1920_ 0_4500.m3u8 » est aussi stocké sur le même serveur. Bien entendu, un autre nombre de pistes peut être repris en local.

Pour une simplicité de mise en œuvre, les fichiers manifest de piste des CDN externes 110 et ceux locaux sont identiques (grâce à des URLs relatifs), de sorte que les segments média à fournir sont également les mêmes. Cela permet au serveur de cache 152 de récupérer les fichiers manifest de piste et segments média auprès des CDN externes 110. Par ailleurs, si des URL absolus sont utilisées, il suffit simplement de changer le nom de domaine du serveur dans les fichiers manifest de piste.

Dans cet exemple, c'est le fichier manifest racine 200 qui référence le serveur de cache, pour l'obtention des fichiers manifest de piste. Dans une variante, les fichiers manifest de piste peuvent également être stockés sur le serveur externe 120. Dans ce cas, le fichier manifest racine 200 peut utiliser des URL relatifs pour l'obtention des fichiers manifest de piste sur le même serveur 120, et ce sont les fichiers manifest de piste qui référence le serveur de cache 152 (URL absolu) pour l'obtention des segments média sur le serveur de cache. La description ci-dessous fait référence au premier cas, mais elle s'applique de façon similaire à la variante. Le premier cas s'applique particulièrement bien aux contenus en direct (live) alors que la variante est adaptée aux contenus à la demande.

Cette variante correspond également au cas du DASH où le seul manifest MPD peut donc référencer le serveur de cache 152 (URL absolu) pour l'obtention des segments média sur le serveur de cache. Pour des contenus « live » en DASH, on peut prévoir que le manifest MPD soit stocké sur le serveur de cache 152 et qu'ainsi le lecteur 199 sollicite le serveur de cache 152 pour obtenir les multiples MPD successifs descriptifs du contenu en direct.

En variante de ces exemples où les pistes descriptives d'un contenu média selon plusieurs qualités sont incluses dans le fichier manifest descriptif de contenu 125, elles peuvent être générées par le lecteur de contenu utilisateur 199 par clonage (ou « pathway cloning ») d'un ou plusieurs chemins existant dans le fichier manifest de contenu 125 transmis par le serveur de manifest 120. Le pathway cloning est une fonction déclarée dans le fichier de pilotage 126, qui se base sur le PATHWAY-ID des pistes pour effectuer un clonage partiel des URLs de pistes.

La **Figure 3a** illustre le clonage de l'ensemble des pistes d'un PATHWAY-ID (ici « CDN-A ») en de nouvelles pistes dont le nom du serveur est remplacé en « local.server.com ». Les pistes créées sont alors affectées d'un nouveau PATHWAY-ID (ici « CDN-1 ») pour permettre une priorisation distincte.

La **Figure 3b** illustre une variante de clonage d'une partie des pistes à l'aide d'identifiants renseignés au niveau des pistes dans le fichier manifest de description 125 (identifiants non montrés en **Figure 2****).** Un identifiant STABLE-RENDITION-ID peut être renseigné au niveau des pistes taggées « EXT-X-MEDIA » (pistes audio et sous-titres). De même, un identifiant STABLE-VARIANT-ID peut être renseigné au niveau des pistes taggées « EXT-X-STREAM-INF » (pistes vidéo). Des valeurs différentes d'identifiants peuvent alors être utilisées pour distinguer les pistes entre elles.

Le fichier manifest de pilotage de la **Figure 3b** prévoit par exemple le remplacement décrit ci-dessus pour la **Figure 3a** (vers un serveur « external2.server.com » dans l'exemple de la Figure) à l'exception des pistes présentant des identifiants particuliers pour lesquels un autre changement d'URL est proposé. Dans l'exemple de la figure par exemple, les pistes vidéo (de « CDN-A ») dont le STABLE-VARIANT-ID vaut "video-SD-HD-FHD" ont leur URL modifiée vers la "nouvelle URL 1" comme défini dans la métadonnée PER-VARIANT-URIS. D'autres valeurs de l'identifiant permettent de prévoir d'autres URL de substitution le cas échéant. De même, les pistes audio ou sous-titres (de « CDN-A ») dont le STABLE-RENDITION-ID vaut "audio-FR" ont leur URL modifiée vers la "nouvelle URL 2" comme défini dans la métadonnée PER-RENDITION-URIS. D'autres valeurs de l'identifiant permettent de prévoir d'autres URL de substitution le cas échéant. Plusieurs valeurs pour un même identifiant peuvent être déclarée pour cloner différemment plusieurs pistes.

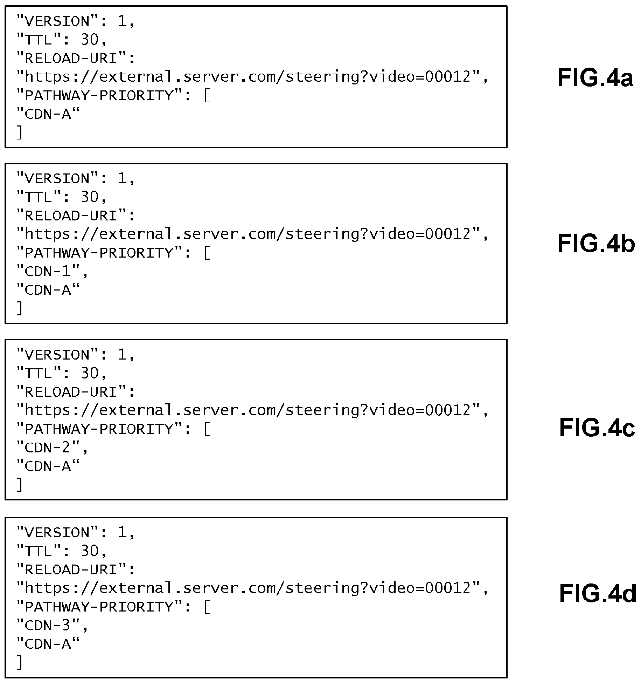

L'usage du fichier manifest de pilotage permet au final de prioriser les pistes externes (« CDN-A ») ou locales (« CDN-1 »). Par exemple, le fichier de la **Figure 4b** impose au lecteur de contenu 199 souhaitant accéder au contenu média concerné (video=00012) de naviguer entre les pistes « CDN-1 » fournies par le CDN local « local.server.com ». Lorsque ces pistes locales ne sont pas accessibles (par exemple l'utilisateur sort du train), le lecteur de contenu 199 est autorisé à basculer sur les pistes « CDN-A » du CDN externe.

Compte tenu de l'espace mémoire limité dans le train 150, il est généralement inenvisageable de stocker l'ensemble des segments média d'un catalogue complet de contenus multimédia.

Certains segments média peuvent être préchargés dans le serveur de cache 152, typiquement en gare avant le départ du train. Dans un mode de réalisation, les segments média d'une piste SD d'un contenu média sont préchargés afin de garantir un accès au contenu média. Dans un mode de réalisation, les segments média d'une piste 4K, FHD ou HD d'un contenu média à plébisciter sont préchargés afin de garantir une expérience utilisateur satisfaisante.

Certains segments média sont chargés à la demande (à la volée), par exemple lors d'un voyage du train lorsqu'un lecteur de contenu 199 en demande la lecture ou avec un contenu en direct. L'agent de streaming 151 est à cette fin en charge de la récupération des segments média restants d'une piste en cours de lecture, auprès du ou des CDN externes, via le réseau de communication 130 ou 140. Les segments récupérés sont stockés dans le serveur de cache 152 pour mise à disposition du lecteur de contenu 199. De préférence, l'agent de streaming 151 s'emploie à précharger l'ensemble des segments média manquants d'un contenu média en cours de lecture.

Le serveur de cache 152 coopère alors avec l'agent de streaming 151 pour récupérer, via le réseau 130 et/ou le réseau mobile 140 (généralement le train est doté d'une interface de communication avec le réseau mobile, lui-même connecté au réseau Internet), les segments vidéo sollicités.

Cette liaison de communication en amont vers les CDN externes 110 n'est pas stable sur le trajet du train, subissant parfois des coupures (par exemple tunnel). Le serveur de cache 152 peut ne pas être en mesure de récupérer à temps un segment média, c'est-à-dire avant d'arriver à la fin du cache, et le fournir au lecteur de contenu 199 le sollicitant. Le lecteur de contenu 199 pilote, dans ce cas, une baisse de qualité par la sélection d'une autre piste.

Chaque lecteur de contenu contrôlant la qualité du contenu média à son niveau, la démultiplication d'utilisateurs simultanés utilisant des qualités variées risque de saturer la liaison de communication, ce qui est préjudiciable à l'expérience utilisateur.

La **Figure 2b** illustre la création de plusieurs CDN locaux virtuels pour piloter, de façon centrale, la qualité (maximale) au niveau des lecteurs de contenu 199. Les pistes de cette figure complètent celles des **Figure 2** (« CDN-A » vers les CDN externe 110, les pistes « CDN-B » pouvant être omises le cas échéant) et **Figure 2a** (« CDN-1 » vers le serveur embarqué 152) pour un contenu média donné. Plusieurs contenus média (voir tous ceux du catalogue) peuvent être concernés par cette approche.

Ces CDN locaux (i.e., avec URL du serveur embarqué) sont dits « virtuels » car ils ne mettent pas en œuvre d'autres serveurs que celui déjà existant, mais simulent plusieurs serveurs afin d'offrir des disponibilités différentes de pistes pour de mêmes contenus média.

Le pilotage entre ces différents CDN virtuels locaux est réalisé à l'aide du fichier manifest de pilotage 126. En particulier, le serveur de manifest 120 est configuré pour modifier, en fonction d'une qualité cible courante, la liste ordonnée d'identifiants de chemin 300 pour un prochain fichier manifest de pilotage à transmettre au lecteur de contenu. Par exemple, en mettant en premier dans cette liste 300 un CDN virtuel local dont la qualité maximale est limitée, les lecteurs de contenu 199 lisant le contenu média concerné sont forcés localement à une qualité maximale limitée, par exemple celle de pistes préchargées dans le serveur de cache 152 pour réduire la sollicitation de la liaison de communication.

Dans l'exemple de la Figure, trois CDN virtuels locaux sont instanciés au travers du PATHWAY-ID : CDN-1, CDN-2, CDN-3. A chaque CDN virtuel correspond une qualité maximale différente : FHD pour CDN-1, HD pour CDN-2 et SD pour CDN-3 dans l'exemple. Tout autre nombre peut être envisagé. Notamment, autant de CDN virtuels locaux peuvent être instanciés qu'il existe de combinaisons de qualités possibles selon les situations de lecture.

Par exemple, sur un contenu média entièrement en cache sur l'ensemble de ses qualités (4K et/ou FHD, HD, SD), un CDN-1 virtuel local contient toutes les qualités, qui est activé par défaut, et un CDN-2 contient les pistes SD et HD, qui est activé pour réduire la qualité maximale accessible aux lecteurs de contenu 199 à la qualité HD. Une telle activation permet de forcer les lecteurs 199 à quitter la lecture 4K/FHD et de libérer le cache 4K ou FHD pour d'autres contenus.

Sur un contenu média entièrement en cache, mais uniquement en SD, un CDN-3 local contient la piste SD uniquement, activé par défaut, et un CDN-2 local contient la piste SD et la piste HD, qui est activé lorsque la piste HD devient entièrement disponible (l'agent 151 se chargeant de sa mise en cache dans le serveur 152 pendant le trajet).

Sur un contenu média avec cache partiel (par exemple 5% du début chargé) en SD et HD ou non encore précaché dans le serveur 152, un CDN-4 local contient la piste SD uniquement, activé par défaut, un CDN-3 local contient la piste SD et la piste HD, activé lorsque la piste HD devient entièrement disponible ou lorsque le débit de la liaison de communication permet de basculer sur la piste HD sans que la lecture ne rattrape la fin du cache (segments qui sont progressivement préchargés dans le serveur de cache 152), un CDN-2 local optionnel contient les pistes SD, HD et FHD, activé lorsque la piste FHD devient entièrement disponible ou lorsque le débit de la liaison de communication permet de basculer sur la piste FHD sans que la lecture ne rattrape la fin du cache, et un CDN-1 local optionnel contient les pistes SD, HD, FHD et 4K, activé lorsque la piste 4K devient entièrement disponible ou lorsque le débit de la liaison de communication permet de basculer sur la piste 4K sans que la lecture ne rattrape la fin du cache. A noter que le CDN-1 ou CDN-2 ou CDN-3 peut être désactivé si le débit de la liaison de communication se réduit de telle sorte que la lecture est susceptible de rattraper la fin du cache, conduisant à réactiver un CDN précédent (CDN-2 ou CDN-3 ou CDN-4).

D'une façon générale, les CDN virtuels locaux, c'est-à-dire les identifiants de chemin différents, sont associés à des jeux ou groupes différents d'une ou plusieurs pistes du même contenu média, chaque jeu présentant une qualité maximale différente. Chaque groupe d'un CDN virtuel local expose un ensemble de qualités. Ces groupes de qualités peuvent se recouper d'un groupe à l'autre.

Dans l'exemple de la Figure, deux pistes de même qualité dans deux jeux différents (CDN virtuels différents) référencent la même URL ou le même fichier média, ce qui permet de stocker une seule fois les segments média dans le serveur de cache 152.

De même, un premier jeu présentant une première qualité maximale comporte la ou les pistes d'un deuxième jeu et une piste additionnelle de qualité égale à la première qualité maximale. Dans l'exemple de la Figure, CDN-2 comporte la piste SD de CDN-3 plus la piste HD définissant sa qualité maximale. De même, CDN-1 comporte les pistes SD et HD de CDN-2 plus la piste FHD définissant sa qualité maximale.

On définit ainsi un ensemble de CDN virtuels locaux de façon incrémentale, par l'ajout de la piste définissant la qualité maximale de chaque CDN : n jeux Jₖ de qualité maximale Qₖ sont créés, qui comprennent k pistes de qualité Q₁ à Qₖ, avec k un entier de 1 à n, et Qᵢ<Qⱼ pour i<j.

En variante, il est possible de ne pas mettre certaines pistes de qualité intermédiaire, afin de limiter les préchargements de segments dans le serveur de cache 152. Par exemple, CDN-1 peut comporter les pistes UHD (4K) et SD, CDN-2 les pistes FHD et SD, CDN-3 les pistes HD et SD, et CDN-4 la seule piste SD. Dans ce cas, chaque jeux J'ₖ comprend uniquement les pistes Q₁ et Qₖ.

Dans ces exemples, une piste basse qualité SD est systématiquement référencée dans chacun des CDN virtuels locaux. Cela permet d'assurer une comptabilité avec tous les lecteurs de contenu 199, certains n'étant pas en mesure de lire des formats en haute qualité. La présence de pistes de qualités intermédiaires offre une finesse d'ajustement de la qualité rendue, et donc une meilleure expérience utilisateur.

A noter que la présence du CDN-A et éventuellement du CDN-B dans le fichier manifest descriptif 125 (donc de pistes avec un URL de serveur externe au train) permet d'accès au contenu en cas de dysfonctionnement du serveur local 152 ou lorsque l'utilisateur sort du train. Une priorisation de CDN-A sur CDN-B ou l'inverse est obtenu via le fichier manifest de pilotage 126.

Les différents CDN virtuels peuvent être référencés dès le début dans le fichier manifest descriptif 125.

En variante, ils peuvent être créés à la volée par le lecteur de contenu 199, via le mécanisme de cloning pathway décrit plus haut. Notamment, les fonctions PER-VARIANT-URIS et PER-RENDITION-URIS peuvent être utilisées pour ne dupliquer que les variantes souhaitées sur le CDN virtuel local, auquel cas le HOST **(****Figure 3b****)** peut être fixé à un serveur inexistant ou inopérant (de sorte à forcer les lecteurs sur les variantes du CDN virtuel local seulement). Toute évolution du cloning pathway permettant de cloner une partie seulement d'un CDN déclaré permettra de s'affranchir de l'indication d'un serveur inexistant ou inopérant.

Dans une autre variante, certains CDN virtuels peuvent être référencés dès le début (par exemple le CDN virtuel ayant l'ensemble des pistes disponibles localement) et d'autres être créés à la volée (les autres CDN virtuels avec une partie seulement de ces pistes disponibles localement).

Comme indiqué plus haut, le pilotage entre les différents CDN virtuels locaux est réalisé à l'aide du fichier manifest de pilotage 126. Dans un mode de réalisation, la liste 300 ordonnée d'identifiants de chemin est modifiée pour comprendre, dans l'ordre de priorité, un unique identifiant de chemin affecté à un CDN virtuel local (dont les pistes référencent l'URL du serveur de cache embarqué 152) et sélectionné en fonction de la qualité cible courante, puis un ou plusieurs identifiants de chemin affectés à un CDN externe 110 (par exemple CDN-A et/ou CDN-B).

Il est ainsi possible de s'assurer que les lecteurs de contenu 199 restent sur des qualités/pistes disponibles en cache localement ou sur des qualités/pistes disponibles que le serveur embarqué 152 est en mesure de récupérer sans que la lecture en cours n'atteigne la fin du cache. D'une façon plus générale, il est possible de forcer un lecteur de contenu à lire uniquement un sous-ensemble de pistes sur un CDN particulier, sous-ensemble variable dans le temps et piloté par le serveur de manifest.

Les **Figures 4a** à **4d** illustrent par exemple quatre fichiers manifest de pilotage 126 que le serveur de manifest 120 peut utiliser pour ce pilotage centralisé des qualités accessibles aux lecteurs 199 embarqués. Bien entendu, un nombre différents de fichiers manifest de pilotage peut être envisagé pour couvrir un nombre différent de possibilité de pilotage des qualités accessibles aux lecteurs.

Le fichier de la **Figure 4a** est utilisé en l'absence de serveur de cache 152 embarqué (train non pourvu ou utilisateur hors train). Les fichiers des **Figures 4b à 4d** référencent d'abord l'un des CDN virtuels puis un CDN externe (ici CDN-A).

Dans le cas du fichier de la **Figure 4b****,** le lecteur 199 peut basculer entre les qualités du CDN-1, par exemple entre FHD, HD et SD pour l'exemple de la **Figure 2b****.** Ici le lecteur a accès à une qualité élevée du contenu média souhaité. Dans le cas du fichier de la **Figure 4c****,** le lecteur 199 peut basculer entre les qualités du CDN-2, par exemple entre HD et SD. Le lecteur a accès à une qualité intermédiaire du contenu média souhaité. Enfin, dans le cas du fichier de la **Figure 4c****,** le lecteur 199 peut basculer entre les qualités du CDN-3, ici seulement utiliser la piste SD. Le lecteur n'a donc accès qu'à une qualité faible du contenu média souhaité.

En fonction de la qualité cible souhaitée, le serveur de manifest 120 transmet donc au lecteur 199 soit le fichier de la **Figure 4b****,** soit celui de la **Figure 4c****,** soit celui de la **Figure 4d****.** De la sorte, il peut modifier en temps réel, la liste ordonnée 300 et la qualité maximale accessible par le lecteur 199.

La qualité cible souhaitée peut être déterminée en fonction d'un état de disponibilité des pistes sur le serveur de cache embarqué 152. Par exemple, une qualité n'est accessible que lorsque la piste est entièrement accessible dans le serveur de cache embarqué 152, i.e., entièrement stockée. Aussi, la qualité cible peut simplement être la meilleure qualité (piste) pour laquelle l'ensemble des segments média sont déjà stockés dans le serveur 152.

Dans ce cas, on détecte qu'une nouvelle piste est mise en cache dans le serveur de cache embarqué, et on utilise la qualité de la nouvelle piste comme qualité cible courante si aucune qualité supérieure n'est stockée entièrement. De façon symétrique, s'il est détecté la suppression d'une ancienne piste du serveur de cache embarqué (par exemple pour libérer de l'espace mémoire pour d'autres contenus à mettre en cache), on utilise la meilleure qualité disponible pour le contenu média restant sur le serveur de cache embarqué comme qualité cible courante.

La qualité cible souhaitée peut être déterminée en fonction de la bande passante disponible sur la liaison de communication entre le train et les CDN externes (utilisés pour récupérer les segments média). Par exemple, seules les qualités (pistes) dont le débit est inférieur à la bande passante disponible peuvent être déclarés comme accessibles. Aussi, la qualité cible peut simplement être la meilleure qualité (piste) dont le débit est inférieur à ladite bande passante. Cela permet de garantir un temps de chargement des segments manquants inférieur à la durée de lecture restante du contenu, de sorte qu'aucune coupure de lecture ne devrait avoir lieu.

Pour éviter des changements permanents, la bande passante de la liaison de communication peut être évaluée (par exemple une moyenne) sur une fenêtre temporelle glissante (par exemple de quelques dizaines de secondes).

La qualité cible souhaitée peut également être déterminée en fonction de la position de lecture du contenu par au moins un lecteur de contenu 199. Par exemple, il peut être déterminé pour quelle qualité maximale il est possible (à l'agent de streaming 151) de charger l'ensemble des segments média manquants sur le serveur embarqué 152, compte tenu de la durée de lecture restante (donc position de lecture) et de la bande passante disponible sur la liaison de communication. L'objectif est d'obtenir les segments média sans que la lecture en cours ne rattrape la fin du cache dans le serveur embarqué 152. Cette qualité maximale peut définir la qualité cible.

Lorsque plusieurs lecteurs de contenu 199 lisent le même contenu média, la position de lecture la plus avancée est prise en compte dans cette évaluation.

Ces différents paramètres pour déterminer la qualité cible peuvent être combinés.

Bien entendu, la qualité cible varie dans le temps. Aussi, une qualité cible courante est définie, qui change avec la mise en cache de segments média et/ou la variation de bande passante de la liaison de communication et/ou la position de lecture du contenu média.

Ainsi, dans le cas où un lecteur 199 rattraperait la fin du cache (des segments media chargés) ou avancerait subitement la position de lecture, il est possible, toujours via le fichier de pilotage 126, de forcer le lecteur (et les autres) à descendre sur une qualité plus basse pour éviter les coupures de lecture.

L'état de disponibilité des pistes (donc la quantité de segments média stockés dans le serveur embarqué 152) peut être déterminée par l'agent de streaming 151 par examen des mémoires du serveur embarqué 152. De même, la bande passante de la liaison de communication vers les CDN externes peut être déterminée par l'agent de streaming 151, à l'aide d'outils classiques de mesure de bande passante ou débit. Enfin, les positions de lecture des contenus média peuvent être remontées par le serveur web du serveur embarqué 152 et adressées à l'agent de streaming 151.

Dans un mode de réalisation, l'agent de streaming 151 met à jour régulièrement la qualité cible courante (par exemple toutes les cinq secondes) en fonction de ces différents paramètres. Il peut transmettre cette valeur au serveur de manifest 120 qui peut alors déterminer la liste ordonnée 300 pour le prochain fichier manifest de pilotage 126 à transmettre pour le contenu média concerné. Il sélectionne un des CDN virtuels (ou PATHWAY-ID) en fonction des qualités maximales associés et de la qualité cible courante, par exemple le CDN virtuel ayant la qualité maximale inférieure ou égale à la qualité cible courante. Puis il priorise le CDN virtuel sélectionné en plaçant son identifiant de chemin (PATHWAY-ID) en premier dans ladite liste ordonnée 300. Comme indiqué plus haut, il peut s'agir simplement de choisir le fichier approprié parmi des fichiers manifest de pilotage prédéfinis (tels ceux des **Figures 4b** à **4d****).**

En variante, l'agent de streaming 151 détermine lui-même le CDN virtuel à sélectionner (voire le fichier approprié) et envoie, au serveur 120, une instruction de modification du fichier manifest de pilotage 126 du contenu média concerné, en lui indiquant quel CDN virtuel à prioriser ou fichier approprié à utiliser.

Dans une variante de réalisation, l'agent de streaming 151 envoie directement au serveur 120 les valeurs des paramètres utilisés pour déterminer la qualité cible (bande passante, état des caches, position de lecture). Dans ce cas, le serveur 120 calcule lui-même la qualité cible courante, et adapte si besoin est la liste ordonnée 300 du fichier manifest de pilotage du contenu média concerné.

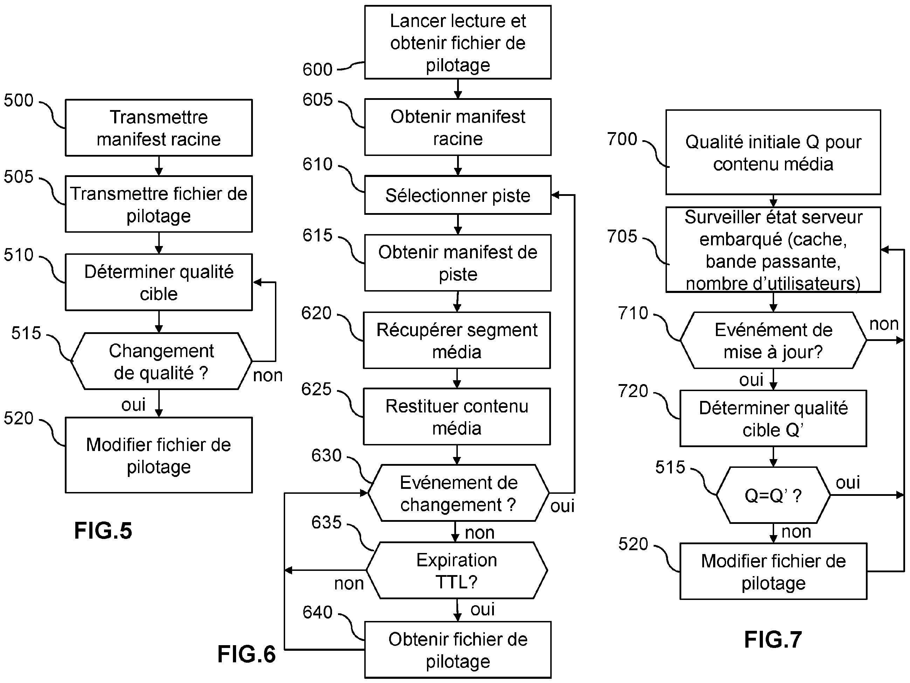

La **Figure 5** et la **Figure 6** illustrent, à l'aide d'ordinogrammes, des étapes de procédés au niveau des équipements de streaming **(****Figure 5****)** et au niveau d'un lecteur de contenu 199 **(****Figure 6****).**

Les procédés débutent lorsqu'une lecture d'un contenu média est déclenchée (étape 600) par un lecteur de contenu 199 hébergé dans un terminal utilisateur. Ce lecteur appelle tout d'abord un serveur de routage 129 **(****Figure 1****)** qui, en fonction de divers paramètres dont l'adresse IP publique des messages reçus, prend la décision des meilleurs CDN à utiliser sur le réseau à cet instant.

Typiquement, le serveur de routage 129 connait la liste des adresses IP publiques correspondant aux différents trains. Ce serveur de routage identifie le train (ou son opérateur), détermine s'il embarque un serveur de cache 152 disponible, ainsi que le ou les domaines du CDN local (donc les noms de domaine utilisés). Le serveur de routage fournit alors l'adresse du serveur 120 au lecteur 199, typiquement un URL de fichier manifest descriptif pour le contenu média, avec potentiellement des paramètres.

En variante, par exemple en DASH pour un contenu en direct, le serveur de routage peut directement fournir l'adresse d'un serveur de manifest embarqué dans le train, pour obtenir le fichier racine MPD.

Le lecteur 199 sollicite (étape 605) le serveur de manifest 120 pour l'obtention du fichier manifest descriptif 125, lequel est transmis (étape 500).

Le fichier manifest descriptif 200 des **Figures 2****,** **2a** et **2b** est par exemple obtenu.

Le fichier comprend les pistes correspondant aux CDN virtuels locaux, les pistes correspondant aux CDN externes 110, le CDN activé par défaut (de préférence un CDN local) et l'URL du fichier manifest de pilotage 126. L'ensemble permet le lancement de la lecture tout en récupérant le premier fichier manifest de pilotage 126 (envoyé à l'étape 505).

Typiquement, le lecteur 199 peut sélectionner (étape 610) la piste la plus adaptée parmi les pistes du CDN activé par défaut, et récupérer (étape 615) le fichier manifest de piste correspondant auprès des serveurs du CDN. A l'aide de ce fichier, le lecteur 199 récupère (étape 620) les premiers segments média auprès du CDN, lançant la lecture du contenu média et son rendu (étape 625).

Dans le cas où c'est le serveur embarqué 152 qui est sollicité pour fournir les segments vidéo d'une piste, celui-ci les récupère auprès des CDN externes s'il ne les stocke pas déjà. En parallèle, différentes politiques de caching peuvent être adoptées, par lesquelles le serveur embarqué 152 tente de récupérer les autres pistes non encore stockées localement, qu'il doit rendre disponibles. Selon la politique appliquée, seules les qualités moindres que la qualité lue sont récupérées. En variante, seules les qualités supérieures à la qualité lue sont récupérées. En variante, l'ensemble des autres qualités sont récupérées. D'autres variantes peuvent être envisagées où certaines des qualités moindres et des qualités supérieures sont récupérées.

Le lecteur 199 détermine alors (étape 630) s'il y a un événement de changement de qualité. Un événement de changement de qualité peut comprendre une erreur réseau (impossibilité d'obtenir les segments média demandés) ou la détection d'un débit amont permettant de solliciter une meilleure qualité. Un tel événement conduit classiquement le lecteur 199 à basculer sur une autre qualité du CDN actif en rebouclant à l'étape 610. Un autre événement de changement de qualité est l'obtention d'un fichier manifest de pilotage 126 qui modifie le CDN actif. Dans ce cas, le lecteur 199 reboucle également à l'étape 610.

En l'absence d'événement de changement, le lecteur 199 vérifie s'il doit récupérer ou recharger le fichier manifest de pilotage 126 (étape 635). Au lancement de la lecture du contenu média (étape 600), le lecteur 199 systématiquement récupère le fichier manifest de pilotage 126 auprès du serveur de manifest 120 à l'URL indiquée dans le fichier manifest descriptif 125. Pendant la lecture du contenu média, le lecteur 199 recharge le fichier manifest de pilotage 126 de façon périodique toutes les TTL secondes tel qu'indiqué dans le dernier fichier manifest de pilotage reçu.

Dans l'affirmative du test 635, le lecteur 199 sollicite, à l'étape 640, le serveur de manifest 120 pour l'obtention du fichier manifest de pilotage 126, lequel est transmis (étape 505).

Le lecteur 199 reboucle à l'étape 630 pour vérifier si le nouveau fichier manifest de pilotage 126 déclenche un changement de qualité. Dans l'affirmative, il reboucle à l'étape 610. Autrement, il attend jusqu'au prochain chargement de fichier manifest de pilotage.

Bien entendu, pendant ce temps, le lecteur 199 continue à récupérer les segments média et à les restituer.

Aussi, lorsque le CDN-1 virtuel est actif (fichier manifest de pilotage de la **Figure 4b** en cours) et la qualité maximale (FHD) a été sélectionnée par le lecteur, la réception d'un fichier manifest de pilotage différent, par exemple celui de la **Figure 4d** (activant le CDN-3 virtuel), conduit le lecteur à sélectionner (étape 610) une piste parmi celles disponibles pour le CDN-3, à savoir la seule piste SD. Ainsi, par le changement de fichier manifest de pilotage 126, le serveur de pilotage 120 a forcé le lecteur (et plus généralement l'ensemble des lecteurs du même contenu média) à basculer sur une qualité moindre. Un contrôle centralisé des qualités lues est ainsi obtenu.

Comme indiqué précédemment, ce contrôle est opéré en fonction de paramètres, tels la bande passante de la liaison de communication du train vers les CDN externes, l'état des caches stockant les pistes accessibles sur le serveur local 152, et/ou la position de lecture courante du contenu média.

Aussi, le serveur de pilotage 120 détermine, de façon continue et conjointement avec l'agent de streaming 151, la qualité cible courante à l'étape 510. La qualité cible peut être déterminée par l'agent de streaming et transmise au serveur 120. En variante, les paramètres précédemment listés peuvent être remontés par l'agent de streaming au serveur 120, lequel calcule la qualité cible courante.

A l'étape 515, le serveur 120 détermine si la nouvelle qualité cible courante est identique à celle associée au CDN actif. Dans l'affirmative, le serveur 120 reboucle sur l'étape 510 de détermination de la qualité cible courante, laquelle étape peut être réalisée à intervalles réguliers, par exemple par intervalles de quelques secondes. En revanche, dans la négative, le serveur de manifest 120 modifie la liste ordonnée 300 du fichier manifest de pilotage 126 qui sera prochainement transmis au lecteur de contenu 199.

Typiquement, la liste ordonnée 300 référence en premier le CDN virtuel local correspondant à la qualité cible courante (dont la qualité maximale est égale à la qualité cible courante, sinon la plus proche inférieure à celle-ci). Un ou plusieurs CDN externes peuvent également être indiqués par la suite, afin de garantir l'accès au contenu média même en dehors du train. De préférence, un seul CDN virtuel local est renseigné, comme c'est le cas dans les exemples des **Figures 4b** à **4d****.**

**La** **Figure 7** illustre des opérations pour le suivi et la mise à jour de la qualité cible courante d'un contenu média, pilotant le CDN virtuel activé. Cette figure correspond aux étapes 510 à 520 prémentionnées.

Dans un mode de réalisation, elles sont réalisées par l'agent de streaming 151. Comme évoqué précédemment, certaines étapes peuvent cependant être mises en œuvre par le serveur 120.

La qualité cible actuelle est notée Q, tandis que la prochaine qualité cible est notée Q'.

La qualité Q initiale (étape 700) correspond à celle du CDN activé par défaut.

A l'étape 705, l'agent de streaming 151 relève les états courants des paramètres utilisés pour la mise à jour de la qualité cible. Ceux indiqués plus haut comprennent l'état des caches stockant les pistes du contenu média accessibles sur le serveur local 152, l'état de la bande passante de la liaison de communication vers les CDN externes et/ou l'état des positions de lecture courante du contenu média. Un suivi en temps réel (de l'ordre de la seconde) peut être mis en place.

A l'étape 710, l'agent de streaming 151 détermine si ces états courants ont suffisamment changé depuis la dernière détermination de Q (qualité actuelle), pour mettre à jour la qualité cible. Ces événements peuvent comprendre la fin du chargement intégral d'une piste sur le serveur de cache 152 ou, de façon symétrique, la suppression des segments média d'une piste du serveur. Ils peuvent également comprendre la diminution (ou l'augmentation) de la bande passante au-delà d'un seuil de déclenchement. Ils peuvent comprendre la détermination d'une qualité dont les segments média manquants (typiquement fonction d'une position de lecture) peuvent être obtenus sans rattraper la fin du cache.

Dans la négative, l'agent 151 retourne à l'étape 705. Dans l'affirmative de l'étape 710, l'agent de streaming 151 détermine une nouvelle qualité cible Q' à partir des états courants des paramètres surveillés. Par exemple, la meilleure qualité parmi les pistes (du contenu média) entièrement en mémoire du serveur de cache 152 est choisie. Dans un autre exemple, la meilleure qualité parmi les pistes (du contenu média) ayant un débit inférieur à la bande passante surveillée est choisie. Dans un autre exemple, la meilleure qualité parmi les pistes qui peuvent être mises en cache dans le serveur de cache 152 sans que la lecture ne rattrape la fin du cache, compte tenu de leurs segments média déjà en cache, de la position de lecture en cours (notamment du lecteur le plus avancé) et de la bande passante courante, est choisie.

Une fois la valeur Q' connue, elle est comparée à Q pour déterminer (étape 515) si le fichier manifest de pilotage 126 du contenu média doit être modifié. Dans la négative, l'agent 151 retourne à l'étape 705. Dans l'affirmative, le fichier manifest de pilotage 126 est modifié à l'étape 520 déjà décrite. Par exemple, Q=Q' lorsque la qualité disponible pour le contenu qui est égale à Q' ou immédiatement en dessous est Q.

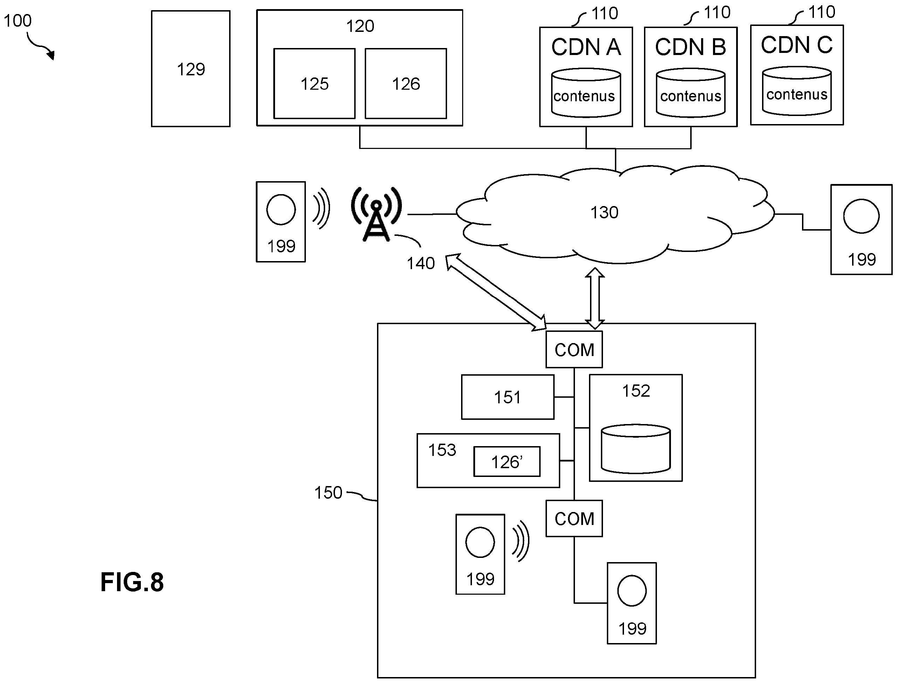

La **Figure 8** illustre une variante de la **Figure 1** dans laquelle l'environnement mobile (e.g., train 150) comporte un serveur de pilotage embarqué 153 qui fournit le fichier manifest de pilotage 126' du contenu média lu. Cette variante offre une réactivité plus importante pour la mise à jour de ce fichier 126' et donc contribue à une meilleure expérience utilisateur.

Dans un mode de réalisation, ce serveur embarqué 153 fournit uniquement la fonction de fourniture des fichiers manifest de pilotage 126' pour les lecteurs de contenu embarqués 199.

Le fonctionnement de ce mode de réalisation se distingue de ce qui a été précédemment décrit en ce que le fichier manifest descriptif 125 d'un contenu média référence ce serveur de pilotage embarqué 153 pour l'obtention du fichier manifest de pilotage pour les lecteurs de contenu embarqués 199.

Comme indiqué plus haut, le serveur de routage 129 identifie le train concerné, par exemple à partie de son adresse IP publique. Il est alors en mesure de fournir, au lecteur de contenu le sollicitant, l'URL du fichier manifest descriptif (pour le contenu média), lequel fichier référence le serveur de pilotage embarqué 153 pour l'obtention du fichier manifest de pilotage (donc référence au niveau de l'élément descriptif de balise EXT-X-CONTENT-STEERING 210).

Dans une variante, le fichier manifest descriptif de contenu 125 référence le serveur de pilotage embarqué 153 comme serveur prioritaire pour l'obtention d'un fichier manifest de pilotage du contenu média et référence le serveur de pilotage externe 120 comme serveur de replis pour l'obtention d'un fichier manifest de pilotage du contenu média. En déclarant ces deux serveurs, le lecteur de contenu 199 peut continuer à charger un fichier manifest de pilotage quand bien même il quitte le train. De plus, comme les deux fichiers manifest de pilotage fournis par les deux serveurs peuvent être différents, ils peuvent être adaptés à l'usage des CDN externes seulement pour le serveur de manifest 120 et à l'usage des CDN virtuels locaux pour le serveur de manifest embarqué 153. Cela contribue à une meilleure expérience utilisateur.

Dans un mode de réalisation particulier, le serveur de pilotage embarqué 153 et le serveur de pilotage externe 120 sont exposés avec le même nom de domaine, localement pour le serveur embarqué 153 et de façon publique pour le serveur externe 120. Un DNS ou proxy local du véhicule 150 peut alors renvoyer tout lecteur sollicitant ce nom de domaine vers le serveur de pilotage embarqué 153. Ce n'est que lorsque le lecteur quitte le véhicule (ou que le serveur 153 dysfonctionne) que les requêtes du lecteur atteignent le serveur externe de pilotage 120.

Cette configuration présente l'avantage d'une seule déclaration de serveur de pilotage au sein du fichier manifest descriptif de contenu 125 tout en garantissant l'existence d'un serveur de replis externe pour l'obtention du fichier manifest de pilotage. On évite ainsi l'interruption de rafraîchissement du fichier manifest de pilotage.

Un fichier manifest descriptif 125 référençant un plus grand nombre de serveurs de manifest pour l'obtention du fichier manifest de pilotage peut être envisagé. Ces serveurs peuvent être organisés selon un ordre de priorité. Ainsi, le lecteur de contenu 199 dispose d'une meilleure disponibilité du fichier manifest de pilotage en cas de défaillance d'un des serveurs ou de difficulté d'accès à celui-ci.

Dans un autre mode de réalisation (non représenté), le serveur embarqué 153 fournit à la fois la fonction de fourniture des fichiers manifest descriptif et des fichiers manifest de pilotage 126'. C'est par exemple le cas pour des contenus en direct, en DASH, où le fichier racine MPD peut être fourni par le serveur embarqué.

Dans ce cas, le serveur de routage 129 peut fournir, au lecteur de contenu le sollicitant, un URL sur le serveur embarqué 153 où obtenir le fichier manifest descriptif pour le contenu média concerné. Comme dans le mode de réalisation précédent, ce fichier manifest descriptif référence le serveur embarqué 153 pour l'obtention du fichier manifest de pilotage (en HLS) ou l'obtention des segments média (en DASH).

Bien entendu, la présente invention ne se limite pas aux formes de réalisation décrites ci-avant à titre d'exemples ; elle s'étend à d'autres variantes. D'autres réalisations sont possibles.

S'il est principalement fait référence à des contenus média de type VOD, les explications qui précèdent s'appliquent également aux contenus « live » (en direct). Dans ce cas, un retard par rapport au direct est appliqué de manière à permettre le caching des segments « live » sur le serveur de cache embarqué 153 avant leur diffusion, et ainsi réduire le risque de coupure. En pratique, ce retard peut être appliqué par le serveur de cache 153 qui fournit les fichiers manifest de piste (en HLS) ou le fichier racine MPD (en DASH) listant les segments média diffués, en « retirant » les segments média les plus récents du fichier et en décalant la date de diffusion. Cette modification est invisible pour le lecteur de contenu 199.

Par ailleurs, s'il est principalement fait référence à des environnements mobiles de type transport en commun pour lesquels la qualité de la liaison de communication avec les CDN externes est susceptible de varier, d'autres environnements collectifs non mobiles, tels un aéroport, une gare ou même une résidence particulière peuvent être concernés.

Par exemple, un décodeur officiant comme serveur de cache 153 peut être fourni à un utilisateur pour son domicile, décodeur sur lequel sont enregistrés en préchargement une ou plusieurs qualités/pistes de contenus média (soit à la demande de l'utilisateur, soit par anticipation fonction par exemple d'une recommandation éditoriale). Selon que ces pistes soient en cours de préchargement ou déjà stockées dans le décodeur, il peut être intéressant d'instancier plusieurs CDN virtuels locaux pour piloter la qualité accessible par tout lecteur de contenu connecté au décodeur.

## Revendications

1. Système de streaming adaptatif (100) d'un contenu média disponible dans une pluralité de qualités, comprenant un serveur de pilotage (120, 153) configuré pour transmettre, à chaque sollicitation d'un lecteur de contenu (199), un fichier manifest de pilotage (126, 126') définissant une liste ordonnée (300) d'un ou plusieurs identifiants de chemin (CDN-A, CDN-1, CDN-2, CDN-3) associés à des pistes descriptives (220, 221, 230, 231, 232) dudit contenu média selon plusieurs qualités pour prioriser l'accès aux pistes par le lecteur de contenu selon ledit ordre de la liste, chaque piste référençant un localisateur uniforme de ressource ou « URL » où accéder aux segments média de la qualité correspondante, des identifiants de chemin différents étant associés à des jeux (CDN-1, CDN-2, CDN-3, CDN-4) différents d'une ou plusieurs pistes du même contenu média, chaque jeu présentant une qualité maximale différente,
**caractérisé en ce que** le serveur de pilotage est configuré pour modifier, en fonction d'une qualité cible courante (Q'), la liste ordonnée d'identifiants de chemin pour un prochain fichier manifest de pilotage à transmettre au lecteur de contenu, la modification de la liste ordonnée d'identifiants de chemin comprenant (1) la sélection d'un des identifiants de chemin en fonction des qualités maximales des jeux associés et de la qualité cible courante, et (2) la priorisation de l'identifiant de chemin sélectionné dans ladite liste ordonnée.

2. Système selon la revendication 1, dans lequel deux pistes de même qualité dans deux jeux différents référencent le même URL ou le même fichier média.

3. Système selon la revendication 1 ou 2, dans lequel un premier jeu présentant une première qualité maximale comporte la ou les pistes d'un deuxième jeu et une piste additionnelle de qualité égale à la première qualité maximale.

4. Système selon l'une des revendications 1 à 3, dans lequel n jeux Jₖ de qualité maximale Qₖ comprennent k pistes de qualité Q₁ à Qₖ ou comprennent les pistes de qualité Q₁ et Qₖ, avec k un entier de 1 à n, et Qᵢ<Qⱼ pour i<j, et les pistes de qualité Qᵢ référencent le même URL ou le même fichier média dans les n jeux Jₖ.

5. Système selon l'une des revendications 1 à 4, dans lequel lesdits jeux présentant des qualités maximales différentes comprennent uniquement des pistes référençant un localisateur uniforme de ressource ou « URL » d'un serveur de cache embarqué (152) dans un véhicule (150), et au moins un jeu additionnel de pistes, associé à un identifiant de chemin distinct, référence un URL de serveur de diffusion unicast de contenus (110) externe au véhicule.

6. Système selon la revendication 5, dans lequel les pistes descriptives référençant un URL du serveur de cache embarqué sont incluses dans un fichier manifest descriptif de contenu (125) transmis par un serveur de manifest et/ou sont générées par le lecteur de contenu par clonage d'un ou plusieurs chemins existant dans un fichier manifest de contenu (125) transmis par le serveur de manifest.

7. Système selon l'une des revendications 1 à 6, dans lequel la liste ordonnée (300) d'identifiants de chemin est modifiée pour comprendre, dans l'ordre de priorité, un unique identifiant de chemin affecté à un jeu de pistes référençant un URL d'un serveur de cache embarqué (152) dans un véhicule (150) et sélectionné en fonction de la qualité cible courante (Q'), puis un ou plusieurs identifiants de chemin affectés à un ou des jeux additionnels de pistes référençant un URL de serveur de contenus (110) externe au véhicule.

8. Système selon l'une des revendications 1 à 7, dans lequel les URL référencent un serveur de cache embarqué (152) dans un véhicule (150), et le serveur de pilotage (120) est externe au véhicule et reçoit, d'un agent de gestion (151) embarqué dans le véhicule, un message indiquant ladite qualité cible courante (Q') pour modifier la liste ordonnée d'identifiants de chemin.

9. Système selon l'une des revendications 1 à 7, dans lequel les URL référencent un serveur de cache embarqué (152) dans un véhicule (150), le serveur de pilotage (153) est embarqué dans le véhicule, des pistes descriptives dudit contenu média selon plusieurs qualités sont incluses dans un fichier manifest descriptif (125) de contenu transmis par un serveur de manifest (120) externe au véhicule, et le fichier manifest descriptif de contenu référence le serveur de pilotage embarqué comme serveur prioritaire pour l'obtention d'un fichier manifest de pilotage du contenu média et référence un second serveur de pilotage, externe au véhicule, comme serveur de replis pour l'obtention d'un fichier manifest de pilotage (126, 126') du contenu média.

10. Système selon l'une des revendications 1 à 7, dans lequel les URL référencent un serveur de cache embarqué (152) dans un véhicule (150), et le serveur de pilotage (153) est embarqué dans le véhicule et est exposé localement avec un nom de domaine identique à celui d'un second serveur de pilotage (120), externe au véhicule.

11. Système selon l'une des revendications 5 à 10, dans lequel le serveur de pilotage (120, 153) ou un agent de gestion (151) embarqué dans le véhicule est configuré pour déterminer la qualité cible courante (Q') en fonction d'un état de disponibilité des pistes sur un serveur de cache (152) embarqué dans le véhicule et/ou d'une bande passante disponible sur une liaison de communication entre le véhicule et un serveur externe de contenus (110).

12. Système selon la revendication précédente, dans lequel la détermination de la qualité cible courante est en outre fonction d'une position de lecture en cours du contenu média.

13. Procédé de streaming adaptatif d'un contenu média disponible dans une pluralité de qualités, comprenant la transmission (505), par un serveur de pilotage (120, 153) à chaque sollicitation d'un lecteur de contenu (199), d'un fichier manifest de pilotage (126, 126') définissant une liste ordonnée (300) d'un ou plusieurs identifiants de chemin (CDN-A, CDN-1, CDN-2, CDN-3) associés à des pistes descriptives (220, 221, 230, 231, 232) dudit contenu média selon plusieurs qualités pour prioriser l'accès aux pistes par le lecteur de contenu selon ledit ordre de la liste, chaque piste référençant un localisateur uniforme de ressource ou « URL » où accéder aux segments média de la qualité correspondante, des identifiants de chemin différents étant associés à des jeux (CDN-1, CDN-2, CDN-3, CDN-4) différents d'une ou plusieurs pistes du même contenu média, chaque jeu présentant une qualité maximale différente,
**caractérisé en ce qu'**il comprend une étape additionnelle, par le serveur de pilotage, de modification (520), en fonction d'une qualité cible courante (Q'), de la liste ordonnée d'identifiants de chemin pour un prochain fichier manifest de pilotage à transmettre au lecteur de contenu, la modification de la liste ordonnée d'identifiants de chemin comprenant (1) la sélection d'un des identifiants de chemin en fonction des qualités maximales des jeux associés et de la qualité cible courante, et (2) la priorisation de l'identifiant de chemin sélectionné dans ladite liste ordonnée.

14. Support d'enregistrement non transitoire lisible par un ordinateur sur lequel est enregistré un programme pour la mise en œuvre du procédé selon la revendication 13, lorsque ce programme est exécuté par un processeur.
